(19) Europäisches Patentamt
European Patent Office
Office européen des brevets

(11) Publication number: 0 223 438 B1

(12) # EUROPEAN PATENT SPECIFICATION

(45) Date of publication of patent specification: 02.01.91 Bulletin 91/01

(51) Int. Cl.$^5$: D21C 11/00

(21) Application number: 86308274.9

(22) Date of filing: 24.10.86

(54) **Process for recovering sodium hydroxide from alkaline pulp waste liquor.**

(30) Priority: 29.10.85 JP 242381/85
01.09.86 JP 203886/86

(43) Date of publication of application: 27.05.87 Bulletin 87/22

(45) Publication of the grant of the patent: 02.01.91 Bulletin 91/01

(84) Designated Contracting States: DE FR GB SE

(56) References cited:
WO-A-83/03407
WO-A-85/02834
FR-A- 847 415
US-A- 3 635 790
ABSTRACT BULLETIN OF THE INSTITUTE OF PAPER CHEMISTRY, vol. 55, no. 3, september 1984, pages 389,390; abstracts no. 3693-3695,3698, Appleton, Wisc., US
PATENTS ABSTRACTS OF JAPAN, vol. 9, no. 12 (C-261)[1735], 18th January 1985; & JP-A-59 162 128 (KAWASAKI JUKOGYO) 13-09-1984

(73) Proprietor: Research Association of Pulp and Paper Technology
c/o 4th Floor Kami Pulp Kaikan 9-11, Ginza 3-chome
Chuo-ku Tokyo (JP)

(72) Inventor: Okano, Masao
2-24-7, Sagamidai, Sagamihara-shi
Kanagawa-Ken (JP)
Inventor: Nakano, Tatuo
10121-1, Hiro-machi, Kure-shi
Hiroshima-ken (JP)
Inventor: Nakura, Michihiro
5-2-3-104, Masago, Chiba-shi
Chiba-ken (JP)
Inventor: Tsukamoto, Haruo
10121-1, Hiro-machi, Kure-shi
Hiroshima-ken (JP)
Inventor: Hasegawa, Keiji
5-17-14, Hailando, Yokosuka-shi
Kanagawa-ken (JP)
Inventor: Tanae, Kazushige
1-15-14-301, Hirado, Totsuka-ku
Yokohama-shi, Kanagawa-ken (JP)
Inventor: Nagato, Shuichi
3-2-3208-844, Shiomidai, Isogo-ku
Yokohama-shi, Kanagawa-ken (JP)
Inventor: Yaguchi, Tokiya
5-21-37, Kasuga-cho
Nerima-ku, Tokyo (JP)
Inventor: Kikuoka, Kazuma
2-13, Shioiri-cho, Yokosuka-shi
Kanagawa-ken (JP)
Inventor: Tokunaga, Kikuo
34-6 Menoto 3-chome, Nagasaki-shi
Nagasaki-ken (JP)
Inventor: Iwahashi, Kouji
40-9, Hokuyo-machi, Nagasaki-shi
Nagasaki-ken (JP)
Inventor: Machida, Osamu
1-544-14, Nakakiyoto, Kiyose-shi
Tokyo (JP)
Inventor: Ito, Hayami
766 Uchikoshi, Himeji-shi
Hyogo-ken (JP)
Inventor: Takeshita, Yukichi
3-9-1, Koumyodai Izumi-shi
Osaka (JP)
Inventor: Nagai, Chiaki
4-42-406 Kariguchidai, Tarumi-ku
Kobe-shi, Hyogo-ken (JP)
Inventor: Ogawa, Katsuyoshi
3-270, Gakuen Daiwa-cho
Nara-shi, Naraken (JP)

(74) Representative: Bizley, Richard Edward et al
BOULT, WADE & TENNANT 27 Furnival Street
London EC4A 1PQ (GB)

EP 0 223 438 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a process for recovering sodium hydroxide from alkaline waste liquor containing substantially no sulfur compounds. Such waste liquor is generally called "black liquor" and is discharged from processes comprising soda cooking wood fibers, washing and optionally bleaching them.

More particularly, it is concerned with a process for recovering sodium hydroxide from alkaline waste liquors containing substantially no sulfur compounds, obtained by soda cooking wood fibers, for example, waste liquors obtained by using sodium hydroxide as a main cooking chemical jointly with at least one member selected from the group consisting of anthraquinone or its derivatives, anthracene derivatives, aliphatic or aromatic amines, aliphatic alcohols, oxygen, hydrogen peroxide, ozone, nitrogen oxides and their sodium salts, washing liquors of the pulp obtained by cooking, and bleaching waste liquors obtained optionally by subjecting the pulp to an alkali-oxygen bleaching, alkali-hydrogen peroxide bleaching or ozone-alkali bleaching. In this specification, by "black liquor" is meant at least the above described alkaline waste liquors.

In the prior art process for soda cooking wood fibers, i.e. the kraft pulp cooking process (which will hereinafter be referred to as "KP process"), the discharged waste liquor called a KP black liquor contains soda components and sulfur compounds derived from sodium hydroxide and sodium sulfide used as cooking chemicals. Recovery of such cooking chemicals from the black liquor is generally carried out by concentrating the KP black liquor, subjecting it to combustion in a reducing atmosphere, dissolving the product in water and then adding calcium oxide (quick lime) thereto to obtain a cooking white liquor containing sodium hydroxide and sodium sulfide. This KP process has substantially been accomplished with respect to the quality of pulp and the recovery of cooking chemicals, but it has the disadvantage that a bad smell arises due to the sulfur compounds and more heat energy is required because of having to recover the calcium oxide.

In order to overcome the above described disadvantage, there has hitherto been proposed a soda cooking process (which will hereinafter been referred to as "AP process") substantially using no sulfur compounds. In such an AP process, recovery of the cooking chemicals is carried out, for example, by concentrating the AP black liquor, subjecting it to oxidation and combustion with iron oxide and then hydrolyzing the oxidation and combustion product with water to recover sodium hydroxide as a cooking white liquor, as disclosed in Japanese Patent Publication No 12724/1976. This recovery process, which is called a direct causticization process with iron oxide, has widely been studied and developed in the world for the purpose of putting it into practical use, since it is substantially free from the problems of a bad smell due to sulfur compounds, the requirement of more heat energy for the recovery of calcium oxide and corrosion of apparatus for carrying out the process.

One of the present inventors has proposed a process for concentrating the KP black liquor, characterized by adding $CO_2$ gas and/or a $CO_2$-containing gas thereto as an agent for lowering the boiling point and viscosity thereof and as a solidification promoter (Japanese Patent Application No 175497/1985) and a process for concentrating the AP black liquor, characterized by adding a substance which exhibits acidity when dissolved in water and/or an acidic substance thereto as a viscosity lowering agent and as a boiling point lowering agent (Japanese Patent Application No 47876/1985).

Similar processes in which carbon dioxide and ferric oxide are together added to black liquor before burning in a furnace, are described by Kishigami K, in Japanese Patent Nos 132191/83, 126391/83 and 126389/83.

The direct causticization process using iron oxide as a causticizing agent (which will hereinafter be referred to as "direct causticization process") is a process for recovering sodium hydroxide having various advantages as set forth above, but if this process is put to practical use in a pulp making process on a commercial scale, the following problems must be solved :

(1) As shown in Fig. 1, AP black liquor has a much higher viscosity than KP black liquor. Fig. 1 shows the viscosity of AP black liquor. Fig. 1 shows the viscosity of AP black liquor of the prior art (Curve 2), KP black liquor of the prior art (Curve 3) and AP black liquor of the present invention (Curve 1) with the concentration of black liquor.

(2) Depending on the type of combustion furnace used for combusting the black liquor, there arise the problems discussed below. In this specification, such a combustion furnace includes not only ordinary combustion furnaces but also furnaces provided with waste heat boilers in the main body and/or in the flue.

As the type of the combustion furnace, there are fluidized bed, fixed bed and high speed fluidized bed furnaces. In this specification, fluidized bed furnace means a commonly used fluidized bed furnace, but fixed bed furnace means a furnace having an oscillating or moving bed type stoker and a fixed type fire grate at a bottom structure. High speed fluidized bed furnace means a furnace in which combustion is effected by transporting most particles at a high speed (e.g. 5-8 m/sec) with a combustion gas and recycling the particles separated from the combustion gas to the furnace via a recycling system to hold a higher particle concentration in the combustion gas.

The following problems arise in combustion of black liquor :

(i) In the case of fixed bed furnaces and high speed fluidized bed furnaces, the difficulty in maintaining combustion reaction conditions.

(ii) In the case of fluidized bed furnaces, problems resulting from the iron oxide being finely divided.

(iii) Furthermore, inorganic impurities such as Al, Cl, Si, etc. contained in the iron oxide and wood chips are accumulated during the process, causing various problems.

The above described problems will now be illustrated in greater detail.

(1) The direct causticization process is a process for recovering chemicals for producing wood pulp, in particular, sodium hydroxide and, simultaneously, it should satisfy the requirement that in a combustion furnace, the combustion energy is recovered as steam and to this end, the black liquor itself is concentrated to a higher concentration and subjected to combustion to raise the heat recover efficiency.

However, the black liquor generally meets with a rapid rising of the viscosity, lowering of the vapor pressure and rapid rising of the boiling point when the concentration of the black liquor is increased. In addition, the direct causticization process, i.e. AP process, has another disadvantage in practical use that the viscosity of the AP black liquor is about 10 times as high as that of the KP black liquor as shown in Fig. 1 even if the solid concentration of the black liquor (which will hereinafter be referred to as "black liquor concentration") is the same, although it has been expected that this process is an excellent process for producing chemical pulp since an apparatus of the KP process can be applied without modification.

If the viscosity of the black liquor is high, not only does its fluidity deteriorate and the concentration efficiency in evaporators lower, but also the transporting efficiency into combustion furnaces is lowered and the sprayability from burners in the combustion furnaces deteriorates, thus lowering the combustibility of the black liquor. When the combustibility of the black liquor is lowered, the atmosphere in the furnace is converted into a reducing atmosphere and the ferric oxide ($Fe_2O_3$) is thus reduced to less reactive triiron tetraoxide ($Fe_3O_4$) or ferrous oxide FeO), which will lower the causticization efficiency, which is itself reflected by the sodium hydroxide recovery efficiency.

When the black liquor is solidified as described above, the solidified AP black liquor is so hygroscopic as shown in Fig. 2 that when stored in a bunker, for example, there occur troubles due to the hygroscopicity and adhesiveness and moreover, other problems arise with the difficulty in transporting and handling. Referring to Fig. 2, the marks ⊙ show the hygroscopicity of the AP black liquor not treated with carbon dioxide and the marks □ and ▲ show respectively those of the AP black liquors treated with carbon dioxide according to the process of the present invention at a pH of 11.1 and 11.2.

Therefore, it is a great disadvantage in practical use that the viscosity of the AP black liquor is 10 times as high as that of the KP black liquor.

(2) As the combustion furnaces of various types, there are used fluidized bed furnaces, fixed bed furnaces and high speed fluidized bed furnaces, individually or in combination.

A process using a fluidized bed furnace is particularly preferable since there can be used an iron ore with such a large grain diameter, e.g. 0.5 to 2 mm, that the time taken for reaction to reach the core thereof is prolonged, because the medium in the furnace can be stirred and mixed sufficiently and be held for a longer residence time in the oxidized state in the furnace, e.g. 0.1 to 2 hours. However, the iron ore is gradually pulverized or finely powdered and discharged to the outside of the furnace (granular iron oxide is powdered by a proportion of 20 to 50% each passage through the furnace), so that after all, it is impossible to keep it fluidized as it is.

Processes using fixed bed furnaces are characterized in that they do not require fluidizing energy and the granulating energy accompanying powdering of the medium unlike fluidized bed furnace processes. Since formation of sodium ferrite ($Na_2Fe_2O_4$) by the reaction of the black liquor and iron oxide is generally carried out through the stages of drying (solidifying) the black liquor, combustion and reaction, however, it is required in the fixed bed furnace that the black liquor and finely powdered iron oxide are previously mixed, sprayed and atomized in the furnace by steam or air, floated and burned during falling down in the space portion of the furnace, and then the reaction is completed at the bottom of the furnace. Thus, if the burning while floating is not complete, the mixture falls down without burning and at the bottom of the furnace, it burns with flaming to give a so-called flaming state. Under this state, there arises a problem that the reaction atmosphere is a reducing type, the causticization efficiency is lower and the product is formed into such extensive masses that the subsequent transportation is difficult. If the sprayed particle diameter is too small, on the other hand, there arises another problem that the quantity of the mixture scattered out of the furnace is increased during falling down and the burning proceeds so fast that the temperature at the bottom of the furnace is lowered and the reaction is not completed. Therefore, the fixed bed furnace process cannot avoid a technically troublesome problem that it is necessary for the purpose of spraying and atomizing the mixture to determine the optimum particle size and to keep this particle size.

A process using a high speed fluidized bed is characterized in that unlike the case of the above described fixed bed furnace, finely divided iron oxide is charged in the furnace without previous mixing, the combustion reaction is carried out while recycling the iron oxide and sodium ferrite at a high speed to thus decrease the Fe/Na mole ratio and enable the use of a small combustion furnace, and no granulation operation is necessary even if energy for recycling the iron oxide is necessary. However, this process also has the problem that the retention time in the furnace is too short to complete sufficiently the reaction and the causticization efficiency is thus lowered.

(3) The white liquor obtained by the direct causticization process contains large amounts of inorganic impurities such as Si, Cl, Ca and the like except Na, which must be removed.

That is, in the ordinary KP process, inorganic impurities derived from wood chips, water used in the process and CaO used as a causticizing agent are added to the process, but of these impurities, the insoluble impurities such as Mg, Ca, Mn and the like are separated and removed as precipitates called dregs or grit in the causticization step and the soluble impurities such as Cl are balanced in a constant quantity in the system of the combustion furnace through evaporation, discharging out of the furnace dust collecting and separation.

In the direct causticization process, on the other hand, impurities in iron ore used commonly as a source of iron oxide, in particular Al, Si and the like, are dissolved out in addition to those from wood chips and water and ordinarily, the amount discharged is less than in the KP process, so that the quantity of the impurities accumulated in the system is increased unless suitable measures are taken. If Al or Si is accumulated in the system, digesters or evaporators are lined with scale, which substantially reduces the heat efficiency and finally makes impossible operation of the process. Furthermore, increased Cl tends to promote the corrosion of boilers at high temperatures, resulting in lowered boiler efficiency.

Accordingly, it would be desirable to provide a process which solves the above problems.

The present invention provides a process for recovering sodium hydroxide from an alkaline waste liquor containing substantially no sulfur compounds, which is generally called a black liquor and is discharged from a process comprising soda cooking wood fibers, washing and optionally bleaching them, which process comprises :

(a) adding a gas comprising carbon dioxide to the black liquor, optionally after concentration thereof, to adjust the pH of the black liquor to 9.5 to 12.5 (determined at a black liquor concentration of 40% and at 80°C),

(b) concentrating the above described black liquor to a solids concentration of 50 to 95%

(c) adding the above described carbon dioxide-treated and concentrated black liquor, oxygen and iron oxide to a combustion furnace, subjecting the mixture to combustion and thus burning organic substances and converting inorganic soda components into sodium carbonate and sodium carbonate into sodium ferrite, and

(d) hydrolyzing the thus resulting product to recover sodium hydroxide solution and iron oxide and recycling the recovered iron oxide to the above described step (c).

The solids concentrations referred to herein are expressed as percentages by weight.

The present invention also provides for the preparation of pulp, paper or paper products using the soda cooking of wood fibers substantially in the absence of sulfur compounds, in which discharged black liquor is treated by the above-described process and the recovered sodium hydroxide solution is optionally recycled to the cooking step.

The present invention is further described by way of example only with reference to the accompanying drawings, in which :

Fig. 1 is a graph showing the relationship between the solid concentration of black liquor and the viscosity of black liquor as regards AP black liquor of the present invention, AP black liquor of the prior art and KP black liquor of the prior art.

Fig. 2 is a graph showing the relationship between the concentration of AP black liquor and the rrhygroscopic degree when treated with carbon dioxide and not treated therewith.

Fig. 3 is a graph showing the relationship between the pH and viscosity of AP black liquor.

Fig. 4 (a) and (b) are respectively schematic views of the contacted state of finely divided iron oxide with AP black liquor not treated with carbon dioxide and that of finely divided iron oxide with AP black liquor treated with carbon dioxide according to the present invention.

Fig. 5 is a flow chart showing one embodiment of the present invention using a fluidized bed furnace.

Fig. 6 is a flow chart showing another embodiment of the present invention using a fixed bed furnace.

Fig. 7 and Fig. 8 are respectively schematic views of fixed bed furnaces which can be favourably applied to the present invention.

Fig. 9 and Fig. 10 are respectively schematic views of the structures of high speed fluidized bed furnaces provided with reaction complementing means.

The steps (a) to (d) according to the present invention will now be illustrated in greater detail, by way of example only.

Step (a)

The gas comprising carbon dioxide used in the present invention may be not only carbon dioxide itself, but also, for example, carbon dioxide-containing exhaust gases such as from black liquor combustion furnaces and other processes for burning organic matter. This gas will hereinafter be referred to merely as "carbon dioxide".

The treatment of the black liquor with carbon dioxide is carried out in order to decrease the viscosity and hygroscopicity of the black liquor and to improve the combustibility thereof. The pH of the black liquor is gradually lowered depending on the degree of the treatment of the black liquor with carbon dioxide and at a specified range of pH, the viscosity is lowered as shown in Fig. 3, thus improving the concentration efficiency of the black liquor. When the black liquor is further concentrated and solidified, the hygroscopicity of the solidified product is lowered as shown in Fig. 2 and accordingly, the sprayability of the black liquor from combustion furnace burners is improved. Consequently, the disadvantage due to rising viscosity of the black liquor in the direct causticization process of the prior art can be overcome or mitigated.

In Fig. 3, the viscosity is measured at a black liquor concentration of 80% and a temperature of 80°C and the pH is measured at a black liquor concentration of 40% and a temperature of 80°C. Curve 1 shows the case of AP black liquor according to the present invention, and Points 2 and 3 show respectively AP black liquor of the prior art and KP black liquor of the prior art.

The AP black liquor is inferior to the KP black liquor in that its ignition point is higher, but the AP black liquor whose pH is lowered by the treatment with carbon dioxide has a lower ignition point, whereby the combustibility thereof is improved.

Use of an exhaust gas from a black liquor combustion furnace or from another combustion process as a source of carbon dioxide to be added to the black liquor advantageously lowers the cost of the process according to the present invention to a great extent.

The concentration of the black liquor to which carbon dioxide is to be added is not specifically limited, and at whatever concentration stage the carbon dioxide is added during the concentration of the black liquor, the subsequent concentrating efficiency and combustibility are favourably affected. The higher the concentration of the black liquor to which carbon dioxide is to be added, the less the quantity of carbon dioxide required for the treatment. However, if the black liquor concentration is too high, the absorption efficiency of carbon dioxide in the black liquor is lowered, and this, therefore, should be avoided from the standpoint of the addition efficiency of carbon dioxide. On the other hand, the lower the black liquor concentration, the greater the quantity of carbon dioxide required for the treatment. In this case, however, the absorption efficiency of carbon dioxide in the black liquor is increased because of the lower viscosity of the black liquor. Thus, the concentration of the black liquor to which carbon dioxide is to be added is preferably 20 to 75%, more preferably 40 to 65%.

The temperature of the black liquor to which carbon dioxide is to be added is not specifically limited, but in general, it is in the range of 20 to 100°C, preferably 40 to 90°C.

The pH range of the black liquor in which the concentrating efficiency of the black liquor will be improved by adding carbon dioxide is 9.5 to 12.5 at a viscosity measuring temperature of 80°C and a black liquor concentration of 80% as is evident from Fig. 3 when the pH is represented by that at a black liquor concentration of 40% and a temperature of 80°C (pH will hereinafter be pH at a black liquor concentration of 40% and temperature of 80°C unless otherwise indicated). A particularly preferred range of pH is 10 to 12. When carbon dioxide is absorbed to a pH of less than 9.5, large amounts of solid materials are precipitated in the black liquor and the apparent viscosity is increased. Thus, operation at a pH of less than 9.5 is not preferable. If the pH is above 12.5, the viscosity of the black liquor is not sufficiently lowered.

The black liquor treated with carbon dioxide has a greatly decreased hygroscopicity as shown in Fig. 2, which is effective for improving the storage property after solidifying and grinding the black liquor as well as the combustibility in a combustion furnace.

One embodiment of an apparatus for absorbing carbon dioxide, suitable for use in the present invention, is outlined in the next paragraph.

As the carbon dioxide absorbing apparatus, there can be used various gas-liquid contact apparatuses and gas absorbing apparatuses, of known wetted-wall columns, packed towers, bubble towers, perforated-plate columns, spray towers, scrubbers, gas-liquid stirring tanks and the like. In particular, as a specific contact reactor for black liquor having a medium concentration, it is preferable to use a cascade evaporator as has hitherto been used, and as a specific contact reactor for black liquor having a high concentration, it is preferable to use a disk evaporator in which concentration is carried out by a rotary disk of indirect heating type and carbon dioxide is introduced into a black liquor tank from the upper and/or lower part of the black liquor level.

Step (b)

The concentration of the carbon dioxide-treated black liquor is carried out so as to increase the heat recovery efficiency when the combustion energy is recovered as steam in a combustion furnace and so as to give a solids concentration of 50 to 95%. If the concentration is lower than 50%, the black liquor is not capable of self-sustaining combustion in the combustion furnace without a combustion aid such as fuel oil, while the 95% concentration is the upper limit when using steam. In general, the concentrating of from about 15-20% (of black liquor discharged from the cooking or washing step) to about 50-70% is carried out by the use of an ordinary multiple effect evaporator such as falling-film evaporator or evaporator of direct contact type. However, for the concentration of black liquor having a concentration of about 70-95%, it is suitable to use a disk evaporator effecting concentration by a rotary disk of indirect heating type as described above, since such a black liquor has a considerably high viscosity even if treated with carbon dioxide. The disk evaporator is an apparatus for concentrating the carbon dioxide-treated black liquor in a high concentration, comprising a cylindrical shaft having a feed inlet and an exhaust outlet for the black liquor at both the ends thereof and a number of hollow rotary disks provided in the shaft, in which the black liquor is fed from the feed inlet while high temperature steam is passed through the rotary disks. Preferably, the rotary disks are provided with a scraper for scraping the black liquor adhered to the disk surfaces near them.

The concentrating can be carried out in a disk evaporator at atmospheric pressure, but in a preferred embodiment, the disk evaporator is used under pressure to improve the concentrating efficiency utilizing the fact that the carbon dioxide-treated black liquor exhibits a decreased viscosity at high temperatures under pressure.

The concentration and solidification of the carbon dioxide-treated black liquor is carried out for the purpose of pulverizing the completely solidified product to a size of generally about 0.5 to 5 mm and then feeding it to a combustion furnace. Preferred embodiments for the concentration and solidification are as follows :

(i) The carbon dioxide-treated black liquor concentrated to a solids concentration of 85% or more is extruded in the form of a thin film from a nozzle under pressure to form a half-solidified sheet, thereby improving cooling and making grinding easy after complete solidification.

(ii) In the above described method (i), iron oxide powder is spread on one or both sides of the half-solidified sheet to bond or pressure-bond the iron oxide powder thereto. This method improves the subsequent step (c).

(iii) In the above described method (i), the carbon dioxide-treated and concentrated black liquor is extruded in the form of a thin film using a plurality of nozzles or slits and iron oxide powder is spread between the thus formed layers, followed by pressure-bonding, thereby forming a sheet of multi-layer structure in which the solidified carbon dioxide-treated black liquor and iron oxide are alternately laminated. This method improves the subsequent step (c).

(iv) In the above described method (i), a sheet of the carbon dioxide-treated black liquor is formed while transporting and folding it up by oscillating the nozzle or controlling the transporting speed of the carbon dioxide-treated black liquor and iron oxide powder is spread on the folded surfaces. This method improves the subsequent step (c).

(v) In the above described methods (i) to (iv), the iron oxide powder to be spread on the sheet of the half-solidified carbon dioxide-treated black liquor is heated to an elevated temperature, preferably 120 to 200°C, to effect a good mixing of the half-solidified sheet and iron oxide powder.

In each of the above desribed embodiments, the iron oxide can be added in a suitable molar proportion to the sodium, generally having an upper limit of 1.2 to 1.8, since the molar ratio of Fe in the iron oxide to Na in the black liquor is generally controlled to 1.2 to 1.8 in the furnace, as described hereinafter.

For the solidification of the carbon dioxide-treated black liquor, there is also a method comprising solidifying the carbon dioxide-treated black liquor on a cylinder whose cylindrical surface is cooled from the inside thereof and then pulverizing using a pulverizer, and it is also suitable to effect the cooling and solidifying on a steel belt, followed by pulverizing by means of a pin crusher.

Step (c)

In this step, organic substances are burned, inorganic soda components are converted into sodium carbonate and sodium carbonate is converted into sodium ferrite. To this end, the carbon dioxide-treated and concentrated black liquor and iron oxide are fed to a combustion furnace and subjected to combustion and reaction. In this case, methods of feeding them to the combustion furnace are classified broadly into the following two categories :

(i) a method comprising prior mixing of the carbon dioxide-treated and concentrated black liquor and iron oxide and then feeding the mixture (premixing method), and

(ii) a method comprising feeding the carbon dioxide-treated and concentrated black liquor and iron oxide individually without premixing (separately feeding method).

The reaction of forming sodium ferrite in a combustion furnace is a solid-liquid reaction and thus needs close contact of iron oxide and sodium carbonate. Therefore, the smaller the particle size of the iron oxide or the more closely contacted previously the iron oxide and sodium carbonate, the higher is the reaction speed. That is, premixing of the carbon dioxide-treated and concentrated black liquor with finely powdered iron oxide is advantageous in respect of maintaining such a particle size that the reaction is completed in a very short time and scattering of the particles to the outside of the furnace can be prevented. Accordingly, this method is preferable for processes using fixed bed furnaces having a limitation in the reaction time, as described hereinafter.

The premixing method is advantageous in shortening the reaction time as described above, but it needs a premixing apparatus and premixing energy, whereas the separately feeding method needs stirring so as to raise the reactivity although it does not need the above described apparatus and energy. These feeding methods, therefore, should be suitably chosen depending on the iron oxide particle size and the type of combustion furnace.

The above described liquid or solidified carbon dioxide-treated and concentrated black liquors and the above described iron oxide are fed to a combustion furnace by any of the above described methods and then subjected to combustion and reaction. This combustion reaction is affected by various factors, for example, (1) properties of the iron oxide (variety, purity, particle size), (2) combustion reaction conditions (temperature, time, Fe/Na mole ratio), (3) type and operation conditions of the combustion furnace and (4) method of withdrawing the reaction product out of the furnace.

These factors will be illustrated in detail.

(1) Properties of Iron Oxide

As a source of iron oxide, there are red iron oxide and iron ores, but from an economic point of view, iron ores are preferable. Above all, in order to prevent scaling troubles due to inorganic impurities (Al, Si, etc.) contained in iron ores in the concentrating step, it is preferable to use high grade hematite of Lake Superior Iron Ore Deposit with a low content of inorganic impurities (i.e. 92-99% iron oxide content).

As to the particle size of the iron ore, in general, decrease thereof results in an increase of the reaction speed and a decrease of Fe/Na mole ratio, but in the case of using a fluidized bed furnace, a largely decreased particle size has various bad influences upon the operation, i.e. difficulty in keeping the fluidized bed, increased amount of particles scattered out of the furnace, lowering of the dewatering efficiency in the causticization step, etc. On the other hand, the use of an iron ore with a larger grain size results in an increased amount of the iron ore with an increase of the Fe/Na mole ratio, but gives an advantage that the dewatering efficiency of the regenerated iron oxide after hydrolyzing is higher. Therefore, an optimum grain size or diameter of the iron ore should be determined depending on the type of combustion furnace, etc., but it is preferably 0.01 to 3 mm.

The iron oxide mixed and used with the carbon dioxide-treated and concentrated black liquor can be reused by discharging from the outlet of the furnace and collecting in a dust collector.

(2) Combustion Reaction Conditions

The higher the reaction temperature is for forming sodium ferrite, the better, from the standpoint of reaction kinetics. Sodium ferrite, as a simple substance, has a melting point of 1300°C and a eutectic point at 1100°C in the case of a mixture with unreacted iron oxide in a mixing ratio (mole ratio) of 1.4. At a temperature of higher than the melting point, sodium ferrite is adhesive so that the fluid state in a fluidized bed furnace is degraded to result in sintering, and at a temperature exceeding 1100°C, formation of hardly hydrolyzable materials is increased. Thus, the combustion reaction is preferably carried out at a temperature of 900 to 1100°C, more preferably 950 to 1050°C.

It is more effective for the reaction of forming sodium ferrite to increase the mole ratio of iron in iron oxide to sodium in the above described carbon dioxide-treated and concentrated black liquor, i.e. Fe/Na ratio, but excessive increase of the Fe/Na mole ratio should be avoided since the amount of iron oxide to be supplied is increased and heat energy required for drying the iron oxide which will be recycled and recharged in the furnace is increased with the increase of the Fe/Na mole ratio. Therefore, the Fe/Na mole ratio is determined according to the type of combustion furnace and the iron oxide particle size, but it is generally 1.2 to 1.8.

(3) Type of Combustion Furnace and Operation Conditions Thereof

When the combustion furnace is a fixed bed furnace, it is preferable to operate the furnace in such a manner that the carbon dioxide-treated and concentrated black liquor and finely divided iron oxide are premixed, sprayed from a nozzle in the form of fine particles with a particle size of 20 to 1000 μm, preferably 50 to 500 μm in the fixed bed furnace, subjected therein to floating and combustion and then reacted completely on a stoker at the furnace bottom.

The reaction is completed at a temperature of 900 to 1000°C for a period of time of 5 to 20 minutes while turning over and moving the reaction mixture on the stoker. This stoker can be of any type with steps or chain grates, for example.

When the combustion furnace is a high speed fluidized bed furnace, it is preferable to operate the furnace in such a manner that the furnace is additionally provided with a reaction complementing means. The carbon dioxide-treated and concentrated black liquor and finely divided iron oxide are separately fed to the furnace and fluidized therein at a high speed and burned by air fed from an air inlet at the bottom thereof, and the reacted or unreacted iron oxide particles and non-burned carbon particles, discharged from the furnace, are collected by a cyclone, allowed to fall down in the reaction complementing means at the lower part of the furnace and subjected to completion of the reaction.

In the high speed fluidized bed furnace, the space velocity is very high, e.g. 5 to 10 m/sec and this is a condition which greatly limits the reaction. Thus, a carbon dioxide-treated black liquor whose ignition temperature is lowered is fed to the furnace to maintain the combustion reaction time. Furthermore, it is more preferable to employ a method of increasing the circulation quantity of the mixture of iron oxide and sodium ferrite (method of raising the circulation ratio) and simultaneously provide the high speed fluidized bed furnace, at the outside thereof, with a reaction complementing means in which high temperature particles collected by a cyclone are charged while feeding air to keep a high temperature and high oxygen content atmosphere for a constant time, thereby burning completely non-burned organic substances in the high temperature particles.

As the above described reaction complementing means, there can be used those of fluidized bed type and moving bed type. In the reaction complementing means of moving bed type, transporting air is fed into a descending pipe of the particle circulation system to form a moving bed capable of functioning as the reaction complementing means.

When the combustion furnace is a fluidized bed furnace, it is preferable to operate the furnace in such a manner that the carbon dioxide-treated black liquor and iron oxide are fed to the furnace, while the finely powdered iron oxide at the outlet of the furnace, as it is or after hydrolysis, is subjected to granulation using the carbon dioxide-treated and concentrated black liquor as a binder, the granulated iron oxide capable of functioning additionally as a fluidizing medium is fed to the furnace and then subjected therein to completion of the reaction.

In the fluidized bed furnace, it is required to prevent iron oxide grains from being powdered. As a countermeasure against this phenomenon, there can be proposed, in addition to the method comprising mixing finely divided iron oxide with a small amount of the carbon dioxide-treated and concentrated black liquor and granulating the resulting mixture by means of a granulator outside the furnace (method of granulation outside furnace), a method comprising feeding separately the carbon dioxide-treated and concentrated black liquor to the furnace and at the same time, using an excellent fluidizing medium such as electrocast alumina or magnesia and other than the iron oxide (fluidizing medium method), or a method comprising effecting the granulation using the adhesiveness of sodium carbonate (method of granulation inside furnace), for example.

For the granulation, in general, there are rolling methods, compacting methods or extrusion methods for example. However, in order to granulate finely divided iron oxide using the above described carbon dioxide-treated and concentrated black liquor as a binder, it is preferable to select the compacting method for the following reasons.

In the case of the rolling method or extrusion method, a large amount of water must be added during granulating and when the granulated mixture is charged in the furnace, the water results in a loss of energy as evaporation energy. The rolling method has further the disadvantage that not only is a longer time taken for the reaction and excessive fluidizing energy required since the grain size is increased, but also the reaction surface area is decreased and the reaction time is thus made longer since the granulated mixture is spherical.

In the case of compacting and shaping by the compacting method, on the other hand, the amount of water can be decreased to reduce the above described energy loss as evaporation energy and the product obtained by compacting and shaping, followed by crushing, is a granulated product which is not limited to the form of spheres, but has irregular forms having a large porosity and surface area which are advantageous for the reaction.

When the carbon dioxide-treated black liquor is used as a binder in a proportion of 5 to 15% by weight in terms of a concentration of 50%, there can be produced a large amount of granulated product without destroying the form of the granules during granulating, which product has an excellent combustibility in the furnace as well as a large porosity, i.e. large surface area.

A preferable compacting and granulating method comprises kneading, by means of a kneader, 55 to 70% by weight of finely divided iron oxide whose surface moisture (water content volatile at lower than 105°C) is reduced to 5% or less by drying, 5 to 15% by weight of a carbon dioxide-treated black liquor and 25 to 30% of a granulated product with a grain size of at most 0.5 mm, which has been sieved, classified and recycled as described hereinafter. Thereafter, the process comprises compacting and shaping the mixture into the form of flakes by a compactor, cracking the flake to a size of at most 5 mm, classifying by a sieving machine and recycling 25 to 30% of the classified product with a size of a most 0.5 mm to the kneader described above. The thus granulated product with a size of 0.5 to 5 mm is fed to the fluidized bed furnace.

Recycling of the granulated product with a grain size of at most 0.5 mm to the kneader results in advantages that a uniform grain size can be held through regranulation, finely divided iron oxide with lower activity, carried over out of the furnace, can be decreased in amount and moreover, a granulated product excellent in reactivity and strength can be obtained.

(4) Method of Withdrawing Reaction Product out of Furnace

The sodium ferrite formed in a combustion furnace is not molten but is solid, and accordingly, withdrawal of the reaction product can be carried out while readily recovering the heat energy of the product, unlike the smelt in the KP process of the prior art. The temperature at which the withdrawal is carried out is optionally lowered to 80 to 300°C depending on the heat balance of a heat recovery boiler (heat exchanger).

As the above described heat exchanger, a fluidized bed cooler or a gas air heater is used for the heat exchange with the air for combustion, or a heat exchanger of water-cooling type is used for heating a water supply service.

Step (d)

The above described solid reaction product is added to an aqueous solution to hydrolyze it into sodium hydroxide and hydrous iron oxide. As an aqueous solution for the hydrolysis reaction, it is preferable to use an aqueous solution of sodium hydroxide with a concentration of 10 to 150 g/l, preferably 50 to 150 g/l in terms of sodium oxide so as to obtain an aqueous solution of sodium hydroxide with a higher concentration, e.g. 200 to 300 g/l, which will hereinafter be referred to as "white liquor". Since the highly concentrated solution of sodium hydroxide is subsequently used for cooking, the concentration of the black liquor discharged from the cooking step is increased, whereby the quantity of steam required for concentrating the black liquor can be reduced. The above described hydrolysis reaction proceeds readily and rapidly at a temperature of 60 to 100°C in 10 to 60 minutes, preferably at 70 to 80°C in 15 to 30 minutes.

Then, the thus obtained highly concentrated sodium hydroxide solution (200 to 300 g/l NaOH in terms of sodium oxide) and hyrous iron oxide are separated from each other. The iron oxide recovered by the hydrolysis is a mixture of hydrous iron oxide and unreacted iron oxide, which will hereinafter be referred to as "hydrous iron oxide".

The hydrous iron oxide is a material which has a surface moisture content of 15 to 25% (measured in a drying procedure at 105°C) after being separated from the solution of sodium hydroxide and dewatered and is capable of returning to iron oxide with release of 5 to 15% of the inner moisture content by further drying at 400 to 500°C. When the dewatering degree of the hydrous iron oxide is increased, the moisture content added to the furnace is decreased to thus raise the boiler efficiency. Accordingly, the higher the dewatering degree, the better.

Considering the water balance throughout the process so as to increase the concentration of sodium hydroxide, the quantity of water for washing Na components of the sodium hydroxide, etc. adhered to the hydrous iron oxide is much more limited than that required in the causticization step of the latest KP process. Therefore, it is important to control the quantity of water to be used as a whole by increasing both the dewatering degree and washing degree of the hydrous iron oxide.

As will clearly be understood from the foregoing illustrations, if the quantity of Na adhered to the hydrous iron oxide is increased, iron oxide to be reacted with the adhered Na is required in addition the iron oxide to be reacted with Na in the black liquor, and the quantity of iron oxide is thus increased. Therefore, it is an important operation to decrease the quantity of Na adhered to the hydrous iron oxide, thus decreasing the quantity of iron oxide uselessly consumed and reducing the moisture content carried in the furnace. This leads to the possibility of increasing the combustion furnace efficiency during combustion.

For the separation of the solution of sodium hydroxide and hydrous iron oxide, dewatering and washing of the hydrous iron oxide, various methods can be adapted, of which it is found as a result of our studies that a belt filter of horizontal type is particularly preferable.

The dewatered and separated hydrous iron oxide is added to the furnace for the purpose of circulating and reusing, so in order to decrease the moisture content carried into the furnace and thus raise the boiler efficiency, the adhered moisture content (surface moisture) is removed by drying to give hydrous iron oxide with an inner moisture content (moisture volatile at 105°C or higher) of 5 to 15%. As the above described drying method, there can be used a steam drying method using a tube drier and a drying method using the heat energy of a flue gas.

Removal of impurities from the white liquor is generally carried out by the following methods individually or in combination :

(1) method comprising precipitating and separating Al, Si, etc. with a magnesium compound,

(2) method comprising separating Cl, etc. by extracting the sodium ferrite from the furnace and flue dust with cold water,

(3) method comprising adding high purity iron oxide to the system while purging a constant amount of the circulated and used iron oxide (iron ore) out of the system, thus removing insoluble impurities and

(4) method comprising using a part of the white liquor in another step (e.g. bleaching step, etc.) to decrease the impurity concentration in the white liquor.

Generally, the above described methods are applied in combination to remove inpurities and to keep an impurity level similar to or less than that of the latest KP process, whereby to make possible repeated use of the white liquor.

In the above described method (1), as the magnesium compound, there can be used magnesium oxide, magnesium carbonate or dolomite, individually or in combination. Above all, magnesium oxide is preferred because of its separating effect, but dolomite is also favourable in view of its price and calcination conditions for activation or use conditions.

In the above described method (2), Cl, etc. is extracted with cold water utilizing the fact that Cl, etc. is dissolved in cold water, but hydrolysis of sodium ferrite does not proceed at a low temperature and sodium carbonate, present in a small quantity, has a lower solubility.

In the above described method (3), inert impurities such as Mg, Mn, Si and the like are removed with the recycled iron oxide by a constant amount out of the system, while in the KP process of the prior art, these impurities are purged as dregs or grit out of the system. Preferably, as the iron oxide, fine powder iron oxide with a particle size of approximately 0.1 to 50 μm is discharged which has been precipitated in a clarifying tank.

In the above described method (4), the white liquor is fed to the alkali extraction stage in the bleaching step, as in the latest KP process wherein the spent liquor from the alkali extraction stage is discharged out of the system, and fresh sodium hdyroxide is used for cooking, thereby lowering the impurity concentration in the white liquor.

As described above, the hydrous iron oxide having been hydrolyzed, dewatered, separated and washed is circulated and reused in the foregoing step (c). The circulation system of the iron oxide is broadly classified by (i) the discharging position in a combustion furnace, for example, furnace bottom, cyclone, electric precipitator, etc. on which the particle size of the iron oxide depends, (ii) the circulation after drying or without drying and (iii) the recharging position of the iron oxide, for example, evaporator, tank of the carbon dioxide-treated and concentrated black liquor at the evaporator outlet, smelt discharged from a combustion furnace, etc.

Various circulation systems of the iron oxide are possible by the combination of the above described conditions (i) to (iii) and above all, preferred embodiments are divided by the recharging positions as follows:

The addition of the iron oxide before or into an evaporator is carried out using mainly fine powder iron oxide in view of its miscibility, reactivity and movability, and the iron oxide after dewatering but without drying is added as it is for the purpose of improving the heat efficiency of a multiple effect evaporator.

In the case of adding at the outlet of an evaporator, the iron oxide is added after drying.

The products from a combustion furnace contain finely divided iron oxide with a particle size of 0.1 to 300 μm, collected, for example, from a cyclone or flue gas by an electric precipitator in addition to sodium ferrite in a granular, finely divided or granulated form discharged from the furnace bottom, and in particular, a method is useful in which a collected product with a smaller particle size (0.1 to 300 μm) is added to the furnace as it is without hydrolyzing or after a granulating or solidifying step.

The inventors have found that even if iron oxide is circulated and reused, the sodium ferrite-forming reaction and hydrolysis reaction can be conducted without any change, that is, iron oxide can repeatedly be used from the standpoint of the reactions. Therefore, addition of fresh iron oxide, free from product in the form of an extended mass, is sufficient in a very small quantity, e.g. in a proportion of 0.5 to 2% based on the weight of iron ore used.

The action or function of the process according to the present invention is summarized below :

(1) AP black liquor intrinsically has a higher ignition temperature than KP black liquor, but when AP black liquor is treated with carbon dioxide to lower the pH, the ignition temperature is lowered and accordingly, its combustibility is improved.

(2) When the pH of the carbon dioxide-treated black liquor (determined at a black liquor concentration of 40% and 80°C) is adjusted to 9.5 to 12.5, the viscosity is lowered as shown in Fig. 3 so that the fluidity and concentrating efficiency of the black liquor are improved and spraying of a high concentration black liquor in a combustion furnace is possible, leading to an improvement in the combustibility of the black liquor.

(3) The carbon dioxide-treated black liquor has less tendency to form a tenacious coating film as compared with a non-treated black liquor. Even if the carbon dioxide-treated black liquor and finely divided iron oxide particles are mixed and then subjected to combustion and calcination in a fluidized bed furnace, there is obtained a porous calcined product with little occurrence of heat compacting and without formation of a compact surface layer consisting of a tenacious black liquor coating on the surface of the calcined product.

This state is shown in Fig. 4. Fig. 4 (a) is a schematic view of the contacted state of finely divided iron oxide 2 with a black liquor layer 1' not treated with carbon dioxide, corresponding to a tenacious surface layer, and Fig. 4 (b) is a schematic view of that of finely divided iron oxide 2 with the black liquor 1 treated with carbon dioxide, according to the present invention.

Consequently, the inside of the formed product is adequately permeated with sodium carbonate formed by the combustion of the black liquor and sufficiently supplied with oxygen, so that there is little tendency of forming triiron tetraoxide (which has a lower reactivity) due to lack of oxygen and the causticization efficiency is increased.

(4) Since the viscosity of the carbon dioxide-treated black liquor is lowered according to the present invention, the fluidity and sprayability through burners are improved to give a good combustibility. This is favourable, in particular, in a fixed bed furnace and high speed fluidized bed furnace in which the combustion and reaction time is limited. That is, in a fixed bed furnace, liquid drops are subjected to completion of combustion in a short time during falling down in the furnace and the ambient atmosphere of the iron oxide is changed from a reducing atmosphere to an oxidizing atmosphere, thus limiting the required reaction time in an easy manner and increasing the causticization efficiency. In addition, since the combustibility is improved and the reaction proceeds in an oxidizing atmosphere, product in the form of an extend mass is not formed, but a finely powdered or granular product is formed. Therefore, withdrawing of the product to the outside of the furnace and heat recovery can be carried out in simple and easy manner. Furthermore, the iron oxide is regenerated and recovered after hydrolyzing, not in extended mass form, so it can be recycled and reused.

(5) Since the grains obtained by compacting in a compactor and granulating iron oxide using the carbon dioxide-treated and concentrated black liquor as a binder, as described above, have a small powder ratio and good dewatering efficiency, it is possible to decrease the amount of sodium lost by adhesion to a constant amount of the iron oxide purged out of the system when removing impurities.

(6) The action of removing impurities from the causticized white liquor by a magnesium compound is probably because when magnesium oxide or dolomite is added to the causticized white liquor, a hydration reaction is started from the surface layer of the magnesium compound particle and magnesium hydroxide is formed, during which there is formed on the surface an activated magnesium hydrate layer plus-charged at a zeta potential of +11.0 mV (in pure water), on which minus-charged aluminate ion and silicate ion are electrochemically adsorbed, and thus Al, Si, etc. contained in the causticized white liquor are adsorbed and removed.

The following examples are given in order to illustrate the present invention without limiting the same. It will be obvious to one skilled in the art that various changes and modifications can be made in the components, ratios, operation order and the structures and arrangements of installations and the like without departing from the scope of the present invention.

Example 1

In Fig. 5, wood chips a were cooked with clarified white liquor b described hereinafter in digester 1 to obtain pulp c and AP black liquor d was then concentrated to a black liquor concentration of 65% by means of low concentration evaporator 2 of falling film type. Black liquor d was treated with a part $e_2$ of carbon dioxide-containing waste gas $e_1$ exhausted from fluidized bed furnace A described below (waste gas taken out of dust collector 10 described below) in absorption apparatus 18 to adjust the pH to 11.0 and lower the viscosity, and then concentrated to a black liquor concentration of 90% in disk evaporator 3 after which the concentrated black liquor was fed to solidifying device 4. As shown in Fig. 5, carbon dioxide-containing waste gas $e_2$ can directly be introduced into disk evaporator 3 to effect simultaneously the control of pH and concentration. In black liquor solidifying device 4, for example, the thus carbon dioxide-treated black liquor was fed on a steel belt as described before, cooled to 80°C, solidified and then reduced in size to about a diameter of 5 mm, followed by feeding to fluidized bed furnace A.

The above described solidified black liquor f fed to fluidized bed furnace A was fluidized and contacted with iron oxide (Fe/Na mole ratio=1.5) from charge tank 7 by air $h_2$ supplied from air box 5 after preheating in heat exchanger 15 described hereinafter, and subjected to combustion. Thus, the organic materials and moisture contained in the black liquor were exhausted as carbon dioxide and steam out of the furnace and the sodium components in the black liquor were reacted with granular iron oxide at 950°C to give granular sodium ferrite.

Of the thus formed sodium ferrite, large-sized granular product i was discharged from the bottom of fluidized bed furnace A, while small-sized fine powder product j was collected in dust collector 10 through boiler main body 8 and cyclone 9. On the other hand, a part of waste gas $e_1$ from dust collector 10 was used as waste gas $e_2$ for treating the black liquor and the other part was used as waste gas $e_3$ for drying, as described below. A part of all of the above described granular product i and fine powder product j were heat-exchanged with air $h_1$ for combustion in heat exchanger 15, cooled and fed to extraction tank 11. Preheated air $h_2$ from heat exchanger 15 was used as a fluidizing gas, as described above.

In extraction tank 11, sodium ferrite was hydrolyzed at a temperature of 70 to 80°C for a reaction time of 30 minutes in weak liquor k, i.e. low concentration solution of sodium hydroxide (100 g/l in terms of sodium oxide) described below to form a solution of sodium hydroxide and hydrous iron oxide.

The thus resulting solution of sodium hydroxide and hydrous iron oxide slurry were dewatered on horizontal belt filter 17 and the sodium hydroxide separated from the iron oxide was transported to clarifying tank 16 as white liquor with a concentration of 200 g/l in terms of sodium oxide.

The dewatered iron oxide was washed with a small amount of pure water m in countercurrent as it was moved on horizontal belt filter 17 to give hydrous iron oxide dewatered to a surface moisture content of 20% and then delivered to drier 13. Fig. 5 shows one embodiment in which a part $e_3$ of carbon dioxide-containing waste gas $e_1$ is used as a heat source of drier 13. Weak liquor k obtained in the washing step was returned back to extraction tank 11 and then subjected to hydrolysis as described above. In the drawing, $e_4$ shows waste gases which have already been used respectively for treating the black liquor and drying.

White liquor 1 was separated from finely divided iron oxide p through precipitation in clarifying tank 16, transported to white liquor storage tank 12 and there subjected to removal of impurity r, for example, by adding a magnesium compound. On the other hand, finely divided iron oxide p precipitated in clarifying tank 16 was transported to granulator 6 or a part of it was discharged out of the system to remove impurities.

Hydrous iron oxide n separated by the horizontal belt filter was dried to a moisture content of 5% by waste gas $e_3$ in drier 13. Of the dried iron oxide, granular iron oxide s was fed to charge tank 7, while fine powder iron oxide t was fed to granulator 6 where it was mixed with fine powder iron oxide p from clarifying tank 16, fine powder product u treated in cold water extractor 14 and carbon dioxide-treated black liquor d', compacted and granulated, and the thus granulated iron oxide v was transported to charge tank 7.

On the other hand, fine powder product j discharged outside furnace A and collected was partially fed to extraction tank 11 for conducting the causticization step, as described above, and the other part, in particular, fine powder product j having a smaller particle size (10 to 50 µm), consisting predominantly of iron oxide such as dusts from boiler main body 8, cyclone 9 and dust collector 10, was fed to cold water extractor 14 without passing through extraction tank 11 to remove impurity w such as Cl and then transported directly to granulator 6.

To charge tank 7 was further fed granular iron oxide x for refreshing in a proportion of 1 to 2% by weight in addition to granular iron oxide s from drier 13 and granular iron oxide v from granulator 6 as described above, and then iron oxide g was charged from charge tank 7 to fluidized bed furnace A.

In white liquor tank 12, a magnesium compound q was added to the white liquor to precipitate and separate impurity r such as Al, Si, etc., and a part of the white liquor was fed to the bleaching step (not shown in Fig. 5), while the other part was fed to digester 1.

Example 2

Fig. 6 shows another embodiment wherein a carbon dioxide-treated liquid black liquor concentrated to a concentration of 70% by a disk evaporator is subjected to combustion reaction in a fixed bed furnace.

In Fig. 6, the same apparatus, devices and parts are represented by the same numerals as in Fig. 5. In this example, the solidifying device and drier are omitted since they are not always required. Moreover, the granulator is not used since it is not particularly required to granulate fine powder iron oxide. The other apparatus or devices are installed in a substantially analogous manner to in Fig. 5.

Hydrous iron oxide n dewatered and separated by horizontal belt filter 17 was fed as it was without passing through a drying step to charge tank 7, where it was premixed with fine powder iron oxide p precipitated and separated in clarifying tank 16 of the white liquor and fresh iron oxide x and simultaneously with the black liquor from low concentration evaporator 2, and the mixture was concentrated by adding carbon dioxide-containing waste gas $e_2$ in disk evaporator 3 and then fed to fixed bed furnace B. In fixed bed furnace, a floating combustion was carried out and the reaction was completed on stoker 5.

One example of fixed bed furnace B is shown in Fig. 7. Referring to Fig. 7, fixed bed furnace B was constructed of boiler tubes 1, furnace 2, water wall 3 and superheater 4. A mixture of the carbon dioxide-treated black liquor and iron oxide (Fe/Na mole ratio = 1.2) was injected in the form of fine particles with a diameter of 50 to 500 μm from nozzle 6 and the injected and mixed liquid particles were subjected to floating combustion in furnace 2 whereby stages of drying, dry distillation, volatile components combustion and char combustion were completed. The combustion product was accumulated on stoker 5 at the lower part of furnace 2, received the combustion radiation heat from furnace 2, underwent sodium ferrite-forming conditions at a temperature of about 900 to 1000°C for a period of time of about 5 to 20 minutes, discharged to the outside of the furnace from stoker 5 and fed to the next step (extraction tank 11 corresponding to the hydrolyzing step in Fig. 5 and Fig. 6). In this case, it is important to float and burn the mixed liquid particles while holding the sodium ferrite-forming conditions.

In Fig. 7, 7 is a mixing tank of carbon dioxide-treated black liquor d' and iron oxide, 8 is a cyclone and P is a pump for feeding carbon dioxide-treated concentrated black liquor.

Other procedures were the same as those of Example 1.

Example 3

In this example, a mixed liquor of the carbon dioxide-treated black liquor and iron oxide was solidified in a solidifying device and then subjected to combustion reaction in fixed bed furnace B and there was used a flow system corresponding to addition of the black liquor solidifying device 4 and means related thereto as shown in Fig. 5 to that of Fig. 6.

An example wherein a solidified mixture of carbon dioxide-treated black liquor d' and iron oxide was subjected to combustion in fixed bed furnace B will be illustrated with reference to Fig. 8 :

Fixed bed furnace B was installed by modifying the bottom of a recovery boiler 1 to additionally provide the bottom part with stoker 5.

A solidified product of the carbon dioxide-treated black liquor containing iron oxide (Fe/Na mole ratio = about 1.2), pulverized to a diameter of 1 to 5 mm was discharged from solids hopper 9 while controlling the flow rate by rotary feeder 10 provided at the bottom part thereof. The discharged solid grains were airflow-transported by pressurised air from blower 11 and fed to auxiliary combustion furnace 2 having a sufficient height to give such a volume that the solid grains fed from the upper part of furnace 2 by airflow were capable of undergoing stages of vaporization, ignition and combustion in a smooth manner. Furnace 2 is provided, at the top thereof, with starting burner 8 to raise the temperature of the furnace at the start.

Air for combustion was supplied by forced draft fan 12, in general, from the top and intermediate parts of auxiliary combustion furnace 2 and air box 4 under stoker 5. The inlet gas temperature of boiler 1 and the layer temperature of char (sodium ferrite) 13 on stoker 5 were controlled, while simultaneously controlling the quantity of NOx, by controlling these three kinds of the amounts of air.

Char 13 undergoing the combustion conditions at 900 to 1000°C for 5 to 20 minutes on stoker 5 was converted into sodium ferrite. The sodium ferrite was generally in a finely powdered form, but depending on the degree of calcination, it sometimes became a brittle mass. In this case, the extended mass was coarsely crushed by crusher 3 provided at the outlet at the lower part of the furnace.

A powder of sodium ferrite, as a product, was conveyed by conveyor 6 arranged at the lowermost part of the furnace and stored in hopper 7 for sodium ferrite, followed by processing in the subsequent causticization step.

The other flow chart was the same as that of Example 1.

Example 4

Fig. 9 shows a further embodiment wherein a carbon dioxide-treated black liquor concentrated to a concentration of 70% by a disk evaporator is subjected to combustion reaction in a combustion furnace consisting of high speed fluidized bed furnace C provided with reaction complementing means 10 of fluidized bed type.

In this example, hydrous iron oxide n dewatered and separated, for example, by horizontal belt filter 17 as shown in Fig. 5 was dried by drier 13 and fed to charge tank 7, but carbon dioxide-treated black liquor d' and hydrous iron oxide n were separately charged in main body 1 of high speed fluidized bed furnace C from charge inlets 2 and 3 without premixing them in charge tank 7 as shown in Fig. 6.

The black liquor and iron oxide were subjected to combustion in main body 1 of the furnace at a high temperature by air supplied from air inlet 4 at the furnace bottom of main body 1 and at the same time, the alkali components in the carbon dioxide-treated concentrated black liquor were caught by the iron oxide grains, a part of which was reacted to form sodium ferrite. The reacted and unreacted iron oxide grains and non-burned organic substance grains were discharged from high speed fluidized bed furnace main body 1, collected by cyclone 6 and allowed to fall down in fluidized bed reactor 10, in which a fluidized bed was formed by introducing air from air feed inlet 11 and they were brought into contact with oxygen in a sufficient quantity at a high temperature, thereby burning completely the non-burned organic substances and reacting sufficiently the iron oxide and alkali. The introduced air was exhausted from waste gas outlet 12 with the combustion gas.

The grains which had been subjected to combustion and reaction in the fluidized bed of fluidized bed reactor 10 were overflowed from the fluidized bed and circulated again to high speed fluidized bed furnace main body 1 via overflow pipe 13 and circulated grain feed pipe 14. These circulated grains played a role of holding uniform the temperature of high speed fluidized bed furnace 1, subjecting the carbon dioxide-treated and concentrated black liquor to stable combustion and catching the alkali in the black liquor by the iron oxide grains during combustion of the black liquor.

A part of the grains overflowed from the fluidized bed of fluidized bed reactor 10 or a part of the grains from the fluidized bed of fluidized bed reactor 10 was discharged as a reaction products out of the system by the use of grain exhaust means 15. This grain exhaust means 15 can be of a table type or a rotary valve type as conventionally used. The grains discharged from grain exhaust means 15 to outside the circulating system were fed to the subsequent steps, e.g. causticizing step from grain outlet 16.

The temperature of fluidized bed reactor 10 depends on the balance of the combustion of non-burned organic substances collected by cyclone 6, heat loss of fluidized bed reactor 10 and heat of causticizing reaction. When the non-burned organic substance is lacking, in particular, the amount of non-burned organic substance grains in high speed fluidized bed furnace 1, transported via overflow pipe 17 and transport pipe 18, is controlled by controlling the amount of a transporting gas introduced from transporting gas feed inlet 19, whereby to hold right the temperature of fluidized bed reactor 10. After all, fluidized bed reactor 10 in Fig. 9 acts as a reaction complementing means for high speed fluidized bed furnace main body 1.

The other flow chart was the same as that of Example 1.

Example 5

Fig. 10 shows a still further embodiment wherein a carbon dioxide-treated black liquor concentrated to a concentration of 90% in disk evaporator 3 (Fig 5) and solidifed with iron oxide in black liquor solidifying device 4 (Fig 5) is subjected to combustion reaction in high speed fluidized bed furnace C provided with another reaction complementing means.

The carbon dioxide-treated black liquor was concentrated, mixed with iron oxide grains to give an Fe/Na mole ratio of 1.2, cooled and pulverized to obtain solid grains (which will hereinafter be referred to as "solid fuel grains"), which were then air-transported through transport pipe 10 and fed to hopper 13 after separating through cyclone 11. The transporting air passing through cyclone 11 was introduced into high speed fluidized bed furnace main body 1 with a refractory wall structure from feed inlet 12.

The solid fuel grains in hopper 13 were controlledly withdrawn by rotary feeder 14 and introduced into high speed fluidized bed furnace main body 1 through fuel feeding nozzle 16 by air supplied from air feed inlet 15 for the introduction of the solid fuel grains.

The above described nozzle 16 connected with the high temperature main body 1 of the high speed fluidized bed furnace had to have a discharge part of a water-cooled structure and a connection part provided with air feed means 17 for preventing adhesion of the solid fuel grains and clogging thereof.

Air for combustion was fed to high speed fluidized bed furnace 1 from air feed port 7 via air box 8 and air distributing plate 9 to burn the above described solid fuel grains. In high speed fluidized bed furnace main body 1, the combustion temperature was held between 950 to 1050°C and the combustion gas flow rate, between 5 to 8 m/sec.

The combustion waste gas from high speed fluidized bed furnace 1 entered cyclone 2 from the upper part of the furnace main body 1 to remove solid particles in the waste gas, and the separated solid particles were circulated to high speed fluidized bed furnace 1 after passing through particle descending pipe 3 and circulated particle feed pipe 4 connecting the bottom part of particle descending pipe 3 and furnace main body 1 and again allowed to rise in furnace main body 1 to form a circulated system. Particle descending pipe 3 functioned as a reaction complementing means for high speed fluidized bed furnace 1.

The combustion waste gas from which solid particles had been separated by cyclone 2 was exhausted in an after flow flue from exhaust port 19 after recovering sensible heat in waste heat boiler 18 of after flow.

The quantity of circulated particles descending in descending pipe 3 was controlled by controlling the quantities of air 5 to be introduced into the lower part of descending pipe 3 and driving air 6. In addition, the quantity of the circulated particles varied with the combustion temperature of high speed fluidized bed furnace 1, grain diameter of iron oxide and variety of ores.

A part of the circulated particles collected in cyclone 2 was introduced into particle cooler 20 via connection pipe 21. In this case, the introduced quantity was controlled by the quantity of driving air 22 so as to keep constant the pressure loss in descending pipe 3. To particle cooler 20 was fed air 23 for fluidizing via air box 24 and distributing plate 25 to fluidize the introduced particles. In particle cooler 20, the particles were cooled by cooling water pipe 26 with cooling water feed inlet 27 and discharge outlet 28, provided in particle cooler 20, and by the above described fluidizing air. The air used for cooling was guided to flue 19 through pipe 29.

Particle cooler 20 was generally operated at a temperature of 250 to 400°C and at a fluidizing air flow rate of 0.3 to 1.0 m/sec depending on the particle size. The resulting particles cooled at the above described temperature were overflowed through overflow pipe 30 and then delivered to the subsequent causticization step via hopper 31, exhaust means 32 and exhaust port 33.

The other procedures were analogous to those of Example 4.

In order to show the merits or advantages of the present invention, the following comparative examples are given.

Comparative Example 1

Example 1 was repeated except that a commonly used granulator was used and the carbon dioxide-containing waste gas $e_2$ was not fed to the disk evaporator.

Comparative Example 2

Example 2 was repeated except that the carbon dioxide-containing waste gas $e_2$ was not fed to the disk evaporator and the floating combustion was not effected to result in flaming at the bottom of the combustion furnace.

Comparative Example 3

Example 3 was repeated except that the reaction complementing means was not installed and the carbon dioxide-containing waste gas $e_2$ was not fed to the disk evaporator.

Comparative Example 4

Example 4 was repeated except that the carbon dioxide-containing waste gas $e_2$ was not fed to the disk evaporator.

The results obtained in the foregoing Examples and Comparative Examples are tabulated below :

| | Causticizing Degree (%) | Operation Stability | Regeneration and Reusing of Iron Oxide | Dewatering Efficiency of Iron Oxide |
|---|---|---|---|---|
| Example 1 | 90-95 | stable | good | good |
| Example 2 | 85-90 | stable | good | good |
| Example 3 | 85-90 | stable | good | good |
| Example 4 | 85-90 | stable | good | good |
| Comparative Example 1 | 80-85 | somewhat unstable | good | not good |
| Comparative Example 2 | 60 | unstable | not good | not good |
| Comparative Example 3 | 60 | unstable | not good | not good |
| Comparative Example 4 | 60 | unstable | not good | not good |

The advantages of the present invention are summarized below :

(1) Since the viscosity of a black liquor is lowered by adding carbon dioxide to the black liquor, the fluidity of the black liquor is improved, resulting in reduction of the operating power of a concentration apparatus and increase of the concentrating efficiency of the black liquor.

Furthermore, the improvement of the fluidity of the black liquor not only improves the sprayability thereof in a combustion furnace, but also makes possible spraying of a further highly concentrated black liquor.

A carbon dioxide-treated black liquor has a lowered ignition temperature and improved combustibility, and tends to be aggregated and finely granulated. Therefore, when iron oxide powder is granulated using this black liquor as a binder, the granulated product is so uniform and porous that the sodium ferrite-forming reaction is allowed to proceed in smooth manner and consequently, a high concentration white liquor can be produced with a higher causticization efficiency.

Furthermore, the hygroscopic property of a black liquor is improved by adding carbon dioxide thereto according to the present invention and it is thus possible to solidify the black liquor in easy manner.

(2) Since a carbon dioxide-treated black liquor can be concentrated to a higher concentration than the KP black liquor of the prior art by a disk evaporator of indirect heating type and the resulting liquid or solidified black liquor can be subjected to combustion in a combustion furnace, it is made possible to utilize effectively the black liquor energy and to raise the heat recovery efficiency.

(3) The problem of powdering of iron oxide in a fluidized bed furnace can be solved by compacting and granulating the iron oxide in a compactor provided with a line for returning a fine powder with a particle size of less than 0.5 mm to a kneader.

The difficulty of maintaining combustion and reaction conditions in a fixed bed furnace can be overcome by premixing a carbon dioxide-treated black liquor and iron oxide, spraying the mixture from a nozzle, subjecting the mixture to combustion and reaction during falling down to the furnace bottom, completing the reaction on a stoker at the furnace bottom and withdrawing the product out of the furnace.

The problem of lack of the reaction time in a high speed fluidized bed furnace can be solved by increasing the cycling ratio of iron oxide and simultaneously, installing a reaction complementing means.

In any type of combustion furnace, the reaction of the black liquor and iron oxide can be sufficiently carried out according to the present invention.

(4) Since the combustion and reaction product is withdrawn outside a furnace as a finely powdered or divided and/or granular solid, heat recovery can effecttively be carried out.

(5) Since an aqueous solution of sodium hydroxide (white liquor) with a concentration of 200 to 300 g/l in terms of sodium oxide is obtained with a higher causticization efficiency (85 to 90%) and the amount of the black liquor added during making pulp is increased, the black liquor concentration in the concentrating step is consequently increased, thus resulting in largely decreasing the amount of steam used for the concentration.

(6) Since removal of impurities in the white liquor can be carried out to an impurity concentration similar to or less than that of the latest KP process by employing various effective removal methods in combination, it is possible to circulate and reuse the white liquor.

(7) The quantity of fresh iron oxide can be saved by repeatedly using the recovered or regenerated finely powdered and/or granular iron oxide.

(8) According to the present invention, the above described direct causticization process can be allowed to function as a system and can effectively be applied to recovery of sodium hydroxide from the alkali pulp waste liquors by grasping the optimum operation conditions in the each step of concentration, combustion and hydrolysis and solving specifically the various problems in the each step.

## Claims

1. A process for recovering sodium hydroxide from an alkaline waste liquor containing substantially no sulfur compounds, which is generally called a black liquor and is discharged from a process comprising soda cooking wood fibers, washing and optionally bleaching them, which process comprises :

(a) adding a gas comprising carbon dioxide to the black liquor, optionally after concentration thereof, to adjust the pH of the black liquor to 9.5 to 12.5 (determined at a black liquor concentration of 40% and at 80°C),

(b) concentrating the above described black liquor to a solids concentration of 50 to 95%,

(c) adding the above described carbon dioxide-treated and concentrated black liquor, oxygen and iron oxide to a combustion furnace, subjecting the mixture to combustion and thus burning organic substances and converting inorganic soda components into sodium carbonate and sodium carbonate into sodium ferrite, and

(d) hydrolyzing the thus resulting product to recovery sodium hydroxide solution and iron oxide, and recycling the recovered iron oxide to the above described step (c).

2. A process as claimed in Claim 1, wherein the black liquor to be pH-adjusted in step (a) has a concentration of 20 to 75% and/or is at a temperature of 20 to 100°C.

3. A process a claimed in Claim 1 or Claim 2, wherein the gas comprising carbon dioxide comprises the waste gas from step (c) or from another combustion furnace or both.

4. A process as claimed in any one of the preceding claims, wherein the carbon dioxide-treated black liquor is concentrated to a solids concentration of at least 85% in step (b) and extruded in the form of a thin film to form a half-solidified sheet of the carbon dioxide-treated and concentrated black liquor, cooled, solidified completely, crushed and fed to step (c), iron oxide powder optionally being spread on one or both sides of the half-solidified sheet of the carbon dioxide-treated and concentrated black liquor.

5. A process as claimed in Claim 4, wherein the iron oxide powder is at a temperature of 120 to 200°C and/or the iron oxide powder is added in such a proportion as to give at most a mole ratio of Fe in the iron oxide to Na in the black liquor of 1.2-1.8.

6. A process as claimed in any one of the preceding claims, wherein the concentration in step (b) is carried out in a disk evaporator.

7. A process as claimed in any one of the preceding claims, wherein the combustion in step (c) is carried out using :

(i) a fixed bed furnace,

(ii) a high speed fluidized bed furnace provided with reaction complementing means, or

(iii) a fluidized bed furnace.

8. A process claimed in Claim 7(i), wherein the carbon dioxide-treated and concentrated black liquor and finely powdered iron oxide are premixed, the mixture is sprayed in the form of fine particles, from a nozzle and floated and burned in the furnace and the reaction is completed on a stoker at the furnace bottom; a process as claimed in Claim 7(ii) wherein the reaction of the carbon dioxide-treated and concentrated black liquor and iron oxide is completed by recirculating a high proportion thereof and using a high temperature oxygen atmosphere in the reaction complementing means ; a process as claimed in Claim 7(iii), wherein granulated iron oxide obtained by granulating finely powdered iron oxide using the carbon dioxide-treated and concentrated black liquor as a binder is used as a fluidizing medium, or wherein finely powdered iron oxide from the outlet at the upper part of the fluidized bed furnace or regenerated finely powdered iron oxide recovered after hydrolysis is combined with the carbon dioxide-treated and concentrated black liquor in a proportion of 5 to 15% by weight (in terms of a concentration of 50%), compacted and crushed, grains with a diameter of 0.5 to 5 mm being fed as a fluidizing medium to the fluidized bed furnace and grains with a diameter of at most 0.5 mm being returned to the combining step with the carbon dioxide-treated and concentrated black liquor as a raw material for the granulation.

9. A process as claimed in any one of the preceding claims, wherein the combustion in step (c) is carried out at a temperature of from 900 to 1100°C and/or while keeping the molar ratio of iron in the iron oxide to sodium in the carbon dioxide-treated and concentrated black liquor in the range of 1.2 to 1.8.

10. A process as claimed in any one of the preceding claims, wherein inorganic impurities in the sodium hydroxide solution obtained in step (d) are removed by adding a magnesium compound thereto and subjecting the resulting product to extraction with cold water.

11. A process as claimed in any one of the preceding claims, wherein in step (d) the hydrolysis is carried out in an aqueous solution of sodium hydroxide at a concentration of 10 to 150 g/l in terms of sodium oxide, and/or is carried out at a temperature of 60 to 100°C, and/or the recovered iron oxide is dried to a moisture content (volatile at a temperature of 105°C) of 5 to 15%.

12. The preparation of pulp, paper or paper products using the soda cooking of wood fibers substantially in the absence of sulfur compounds, in which discharged black liquor is treated by a process as claimed in any one of the preceding claims and the recovered sodium hydroxide solution is optionally recycled to the cooking step.

## Ansprüche

1. Verfahren zur Wiedergewinnung von Natriumhydroxid aus einer alkalischen Ablauge, enthaltend praktisch keine Schwefelverbindungen, die allgemein Schwarzlauge genannt und aus einem Verfahren abgeführt wird, bei dem Holzfasern mit Natronlauge gekocht, gewaschen und gegebenenfalls gebleicht werden, dadurch **gekennzeichnet**, daß man

(a) der Schwarzlauge, gegebenenfalls nach deren Einengung, ein Gas, umfassend Kohlendioxid, zusetzt, um den pH der Schwarzlauge auf 9,5 bis 12,5 einzustellen (bestimmt bei einer Schwarzlaugen-Konzentration von 40% und bei 80°C);

(b) die oben beschriebene Schwarzlauge auf einen Feststoffgehalt von 50 bis 95% konzentriert;

(c) die oben beschriebene mit Kohlendioxid behandelte und konzentrierte Schwarzlauge, Sauerstoff und Eisenoxid in einen Verbrennungsofen einbringt, das Gemisch verbrennt und so die organischen Substanzen verbrennt und die anorganischen Soda- bzw. Natrium-Komponenten in Natriumcarbonat und Natriumcarbonat in Natriumferrit überführt, und

(d) das so erhaltene Produkt hydrolysiert, um Natriumhydroxid-Lösung und Eisenoxid zurückzugewinnen und das zurückgewonnene Eisenoxid in die oben beschriebene Stufe (c) zurückführt.

2. Verfahren nach Anspruch 1, dadurch **gekennzeichnet**, daß die Schwarzlauge, deren pH in Stufe (a) eingestellt werden soll, eine Konzentration von 20 bis 75% und/oder eine Temperatur von 20 bis 100°C aufweist.

3. Verfahren nach Anspruch 1 oder 2, dadurch **gekennzeichnet**, daß das Gas, umfassend Kohlendioxid, das Abgas aus Stufe (c) oder aus einem anderen Verbrennungsofen oder beide umfaßt.

4. Verfahren nach einem der vorangehenden Ansprüche, dadurch **gekennzeichnet**, daß die mit Kohlendioxid behandelte Schwarzlauge auf einen Feststoffgehalt von mindestens 85% in Stufe (b) eingeengt und in Form eines dünnen Films unter Bildung einer halbverfestigten Bahn der mit Kohlendioxid behandelten und eingeengten Schwarzlauge extrudiert, gekühlt, vollständig verfestigt, vermahlen und in Stufe (c) eingespeist wird, wobei gegebenenfalls Eisenoxid-Pulver auf einer oder beiden Seiten der halbverfestigten Bahn der mit Kohlendioxid behandelten und konzentrierten Schwarzlauge verteilt wird.

5. Verfahren nach Anspruch 4, dadurch **gekennzeichnet**, daß das Eisenoxid-Pulver eine Temperatur von 120 bis 200°C aufweist und/oder das Eisenoxid-Pulver in solch einer Anteilsmenge zugesetzt wird, daß man höchstens ein Molverhältnis von Fe im Eisenoxid zu Na in der Schwarzlauge von 1,2 bis 1,8 erhält.

6. Verfahren nach einem der vorangehenden Ansprüche, dadurch **gekennzeichnet**, daß man die Konzentration in Stufe (b) in einem Scheibenverdampfer durchführt.

7. Verfahren nach einem der vorangehenden Ansprüche, dadurch **gekennzeichnet**, daß man die Verbrennung in Stufe (c) ausführt unter Verwendung Von

(i) einem Festbettofen,

(ii) einem Hochgeschwindigkeits-Wirbelschichtofen,versehen mit Mitteln zur Vervollständigung der Reaktion oder

(iii) einem Wirbelschichtofen.

8. Verfahren nach Anspruch 7(i), dadurch **gekennzeichnet,** daß man die mit Kohlendioxid behandelte und konzentrierte Schwarzlauge und das feingepulverte Eisenoxid vormischt, das Gemisch in Form feiner Teilchen aus einer Düse in den Ofen sprüht und flotiert und verbrennt und die Reaktion auf einem Stoker am Boden des Ofens zu Ende führt ; ein Verfahren nach Anspruch 7(ii), dadurch **gekennzeichnet,** daß man die Reaktion der mit Kohlendioxid behandelten und konzentrierten Schwarzlauge und des Eisenoxid zu Ende führt, indem man einen hohen Anteil davon in den Kreislauf zurückführt und eine Hochtemperatur-Sauerstoffatmosphäre in den Mitteln zur Vervollständigung der Reaktion verwendet ; ein Verfahren nach Anspruch 7(iii), dadurch **gekennzeichnet,** daß man granuliertes Eisenoxid, erhalten durch Granulieren von fein gepulvertem Eisenoxid unter Verwendung der mit Kohlendioxid behandelten und konzentrierten Schwarzlauge als Bindemittel, als Verwirbelungsmedium verwendet oder daß man feingepulvertes Eisenoxid aus dem Auslaß im oberen Teil des Wirbelschichtofens oder regeneriertes fein-gepulvertes Eisenoxid, zurückgewonnen nach Hydrolyse, mit der mit Kohlendioxid behandelten und konzentrierten Schwarzlauge in einem Anteil von 5 bis 15 Gew.-% (ausgedrückt als Konzentration von 50%) zusammenbringt, kompaktiert und vermahlt, wobei Körner mit einem Durchmesser von 0,5 bis 5 mm als Verwirbelungsmedium in den Wirbelschichtofen eingespeist und Körner mit einem Durchmesser von höchstens 0,5 mm in die Stufe der Vereinigung mit der mit Kohlendioxid behandelten und konzentrierten Schwarzlauge als Rohmaterial für die Granulierung zurückgeführt werden.

9. Verfahren nach einem der vorangehenden Ansprüche, dadurch **gekennzeichnet,** daß man die Verbrennung in Stufe (c) bei einer Temperatur von 900 bis 1100°C durchführt und/oder dabei das Molverhältnis von Eisen im Eisenoxid zu Natrium in der mit Kohlendioxid behandelten und konzentrierten Schwarzlauge im Bereich von 1,2 bis 1,8 hält.

10. Verfahren nach einem der vorangehenden Ansprüche, dadurch **gekennzeichnet,** daß man anorganische Verunreinigungen in der Natriumhydroxid-Lösung, die in Stufe (d) erhalten wird, durch Zugabe einer Magnesiumverbindung und Extrahieren des erhaltenen Produktes mit kaltem Wasser entfernt.

11. Verfahren nach einem der vorangehenden Ansprüche, dadurch **gekennzeichnet,** daß man in Stufe (d) die Hydrolyse in einer wässrigen Lösung von Natriumhydroxid bei einer Konzentration von 10 bis 150 g/l, gerechnet als Natriumoxid, durchführt und/oder bei einer Temperatur von 60 bis 100°C durchführt und/oder das zurückgewonnene Eisenoxid auf einen Feuchtigkeitsgehalt (flüchtiger Anteil bei einer Temperatur von 105°C) von 5 bis 15% trocknet.

12. Herstellung von Papierbrei, Papier oder Papierprodukten unter Anwendung des Natronaufschlusses von Holzfasern, praktisch in Abwesenheit von Schwefelverbindungen, dadurch **gekennzeichnet,** daß man abgegebene Schwarzlauge mit Hilfe eines Verfahrens nach einem der vorangehenden Ansprüche behandelt und die zurückgewonnene Natriumhydroxid-Lösung gegebenenfalls in die Aufschlußstufe zurückführt.

## Revendications

1. Procédé pour récupérer l'hydroxyde de sodium d'une liqueur alcaline usée ne contenant principalement pas de composés du soufre, que l'on appelle généralement liqueur noire et qui est déchargée d'un procédé comprenant le lessivage à la soude de fibres de bois, leur lavage et leur blanchiment facultatif, procédé qui consiste :

(a) à ajouter un gaz comprenant de l'anhydride carbonique à la liqueur noire, éventuellement après sa concentration, pour ajuster le pH de la liqueur noire à une valeur de 9,5 à 12,5 (déterminée pour une concentration de la liqueur noire de 40% et à 80°C),

(b) à concentrer la liqueur noire décrite ci-dessus jusqu'à une concentration en matières solides de 50 à 95%,

(c) à introduire la liqueur noire traitée à l'anhydride carbonique et concentrée décrite ci-dessus, de l'oxygène et de l'oxyde de fer dans un four de combustion, à soumettre le mélange à une combustion et à faire ainsi brûler des substances organiques et à convertir les composants inorganiques de la soude en carbonate de sodium et le carbonate de sodium en ferrite de sodium, et

(d) à hydrolyser le produit ainsi obtenu pour récupérer une solution d'hydroxyde de sodium et de l'oxyde de fer, et à recycler l'oxyde de fer récupéré dans l'étape (c) décrite ci-dessus.

2. Procédé suivant la revendication 1, dans lequel la liqueur noire dont le pH doit être ajusté dans l'étape (a) est à une concentration de 20 à 75% et/ou à une température de 20 à 100°C.

3. Procédé suivant la revendication 1 ou la revendication 2, dans lequel le gaz comprenant de l'anhydride carbonique constitue le gaz résiduaire venant de l'étape (c) ou provenant d'un autre four de combustion, ou des deux.

4. Procédé suivant l'une quelconque des revendications précédentes, dans lequel la liqueur noire traitée à l'anhydride carbonique est concentrée à une teneur en matières solides d'au moins 85% dans l'étape (b) et est extrudée sous forme d'une mince pellicule pour former une feuille à demi solidifiée de liqueur noire traitée à l'anhydride carbonique et concentrée, la feuille est refroidie, complètement solidifiée, broyée et chargée dans l'étape (c), de l'oxyde de fer en poudre étant facultativement répandu sur une face ou sur les deux faces de la feuille à demi solidifiée de liqueur noire traitée à l'anhydride carbonique et concentrée.

5. Procédé suivant la revendication 4, dans lequel l'oxyde de fer en poudre se trouve à une température de 120 à 200°C, et/ou il est ajouté en proportion telle qu'il y ait tout au plus un rapport molaire du fer dans l'oxyde de fer au sodium dans la liqueur noire de 1,2-1,8.

6. Procédé suivant l'une quelconque des revendications précédentes, dans lequel la concentration dans l'étape (b) est effectuée dans un évaporateur à disque.

7. Procédé suivant l'une quelconque des revendications précédentes, dans lequel la combustion dans l'étape (c) est effectuée avec utilisation :

(i) d'un four à lit fixe,

(ii) d'un four à lit fluidisé à grande vitesse équipé de moyens complétant la réaction, ou

(iii) d'un four à lit fluidisé.

8. Procédé suivant la revendication 7(i), dans lequel la liqueur noire traitée à l'anhydride carbonique et concentrée et l'oxyde de fer en poudre fine sont préalablement mélangés, le mélange est pulvérisé en fines particules par une buse et mis en suspension et brûlé dans le four, et la réaction est accomplie sur un chauffeur à la base du four ; procédé suivant la revendication 7(ii), dans lequel la réaction de la liqueur noire traitée à l'anhydride carbonique et concentrée et de l'oxyde de fer est accomplie par recyclage d'une forte proportion des composants et utilisation d'une atmosphère d'oxygène à haute température dans les moyens complétant la réaction ; procédé suivant la revendication 7(iii), dans lequel de l'oxyde de fer en granules obtenu par granulation d'oxyde de fer en poudre fine en utilisant la liqueur noire traitée à l'anhydride carbonique et concentrée comme liant est utilisé comme milieu de fluidisation, ou bien de l'oxyde de fer en poudre fine sortant à la partie supérieure du four à lit fluidisé ou de l'oxyde de fer régénéré en poudre fine récupéré après hydrolyse est mélangé à la liqueur noire traitée à l'anhydride carbonique et concentrée en proportion de 5 à 15% en poids (sur la base d'une concentration de 50%), le mélange est compacté et broyé, des grains d'un diamètre de 0,5 à 5 mm étant chargés comme milieu de fluidisation dans le four à lit fluidisé et des grains d'un diamètre au maximum égal à 0,5 mm étant recyclés dans l'étape de mélange avec la liqueur noire traitée à l'anhydride carbonique et concentrée, comme matière brute destinée à la granulation.

9. Procédé suivant l'une quelconque des revendications précédentes, dans lequel la combustion dans l'étape (c) est conduite à une température de 900 à 1100°C et/ou en maintenant le rapport molaire du fer dans l'oxyde de fer au sodium dans la liqueur noire traitée à l'anhydride carbonique et concentrée dans la plage de 1,2 à 1,8.

10. Procédé suivant l'une quelconque des revendications précédentes, dans lequel des impuretés inorganiques présentes dans la solution d'hydroxyde de sodium obtenue dans l'étape (d) sont enlevées par addition d'un composé de magnésium à cette solution et exposition du produit résultant à une extraction à l'eau froide.

11. Procédé suivant l'une quelconque des revendications précédentes, dans lequel l'hydrolyse est effectuée dans l'étape (d) dans une solution aqueuse d'hydroxyde de sodium à une concentration de 10 à 150 g/l en termes d'oxyde de sodium, et/ou elle est effectuée à une température de 60 à 100°C, et/ou l'oxyde de fer récupéré est séché jusqu'à une teneur en humidité (matière volatile à une température de 105°C) de 5 à 15%.

12. Préparation d'une pâte, de papier ou de produits papetiers avec utilisation d'un lessivage à la soude de fibres de bois principalement en l'absence de composés du soufre, dans laquelle la liqueur noire déchargée est traitée par un procédé suivant l'une quelconque des revendications précédentes, et la solution d'hydroxyde de sodium récupérée est facultativement recyclée dans l'étape de lessivage.

FIG. 1

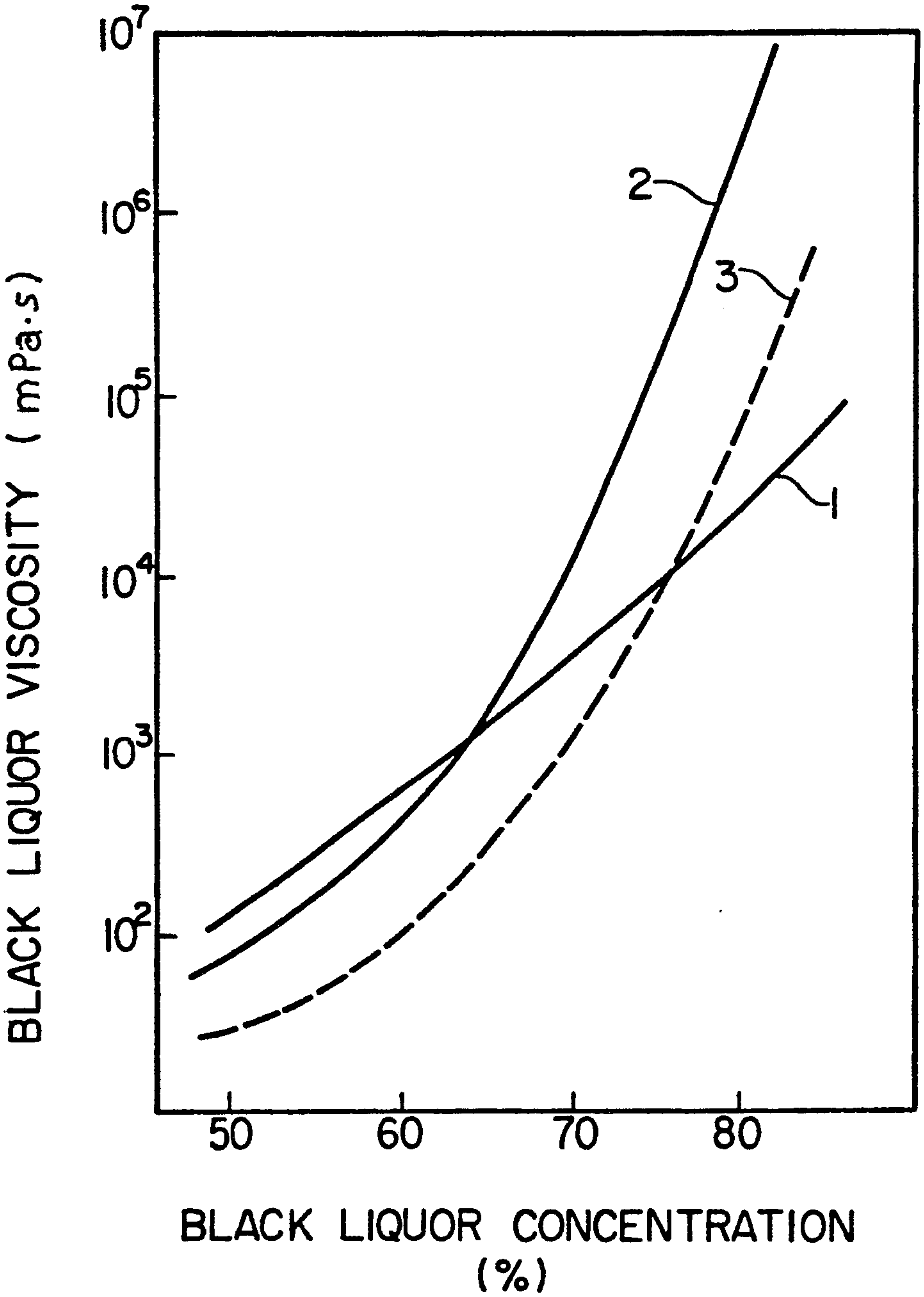
$10^7$
$10^6$
$10^5$
$10^4$
$10^3$
$10^2$
BLACK LIQUOR VISCOSITY ( mPa·s )
2
3
1
50
60
70
80
BLACK LIQUOR CONCENTRATION (%)

FIG. 2

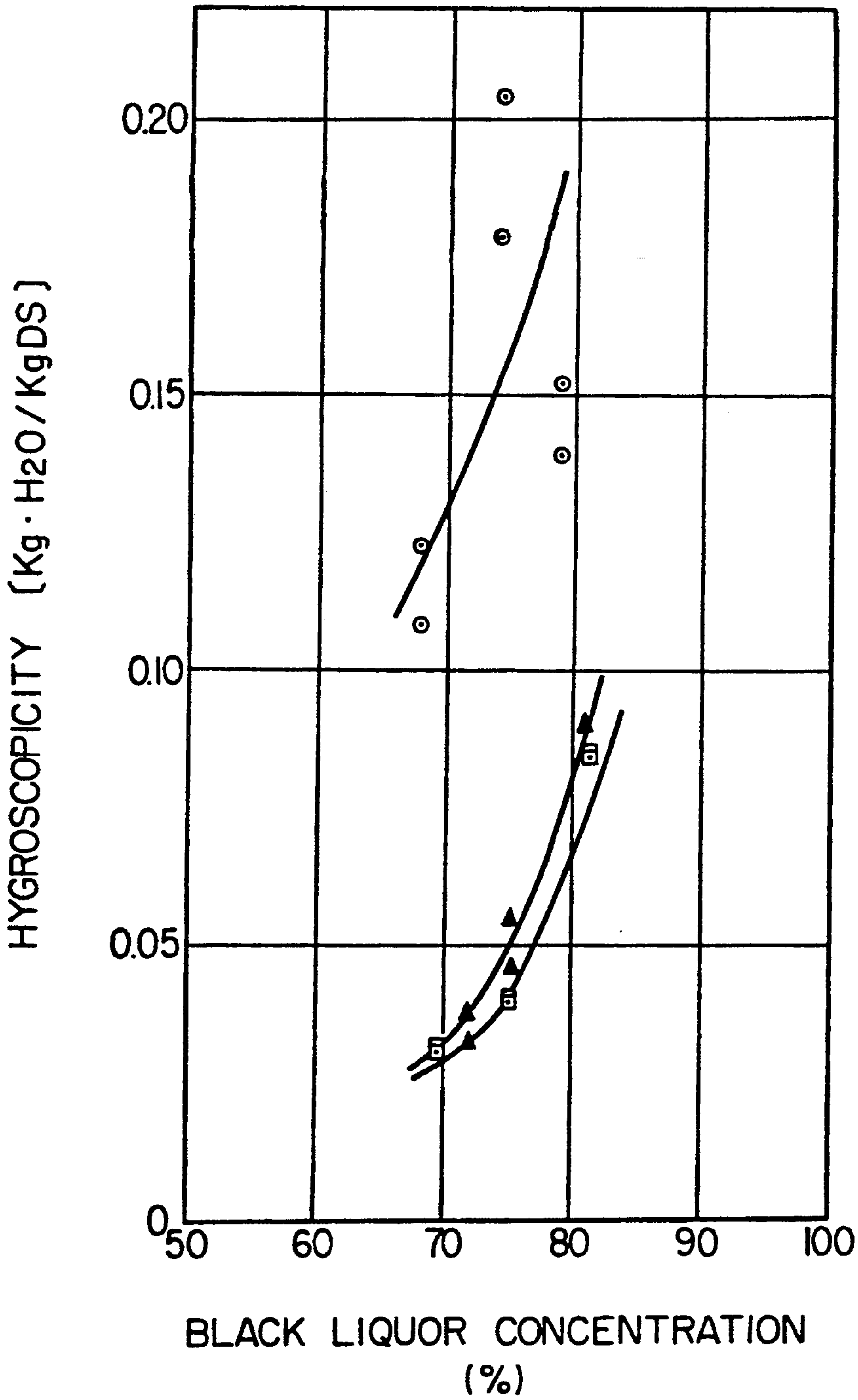
HYGROSCOPICITY (Kg · H2O / KgDS)
0.20
0.15
0.10
0.05
0
50
60
70
80
90
100
BLACK LIQUOR CONCENTRATION
(%)

FIG. 3

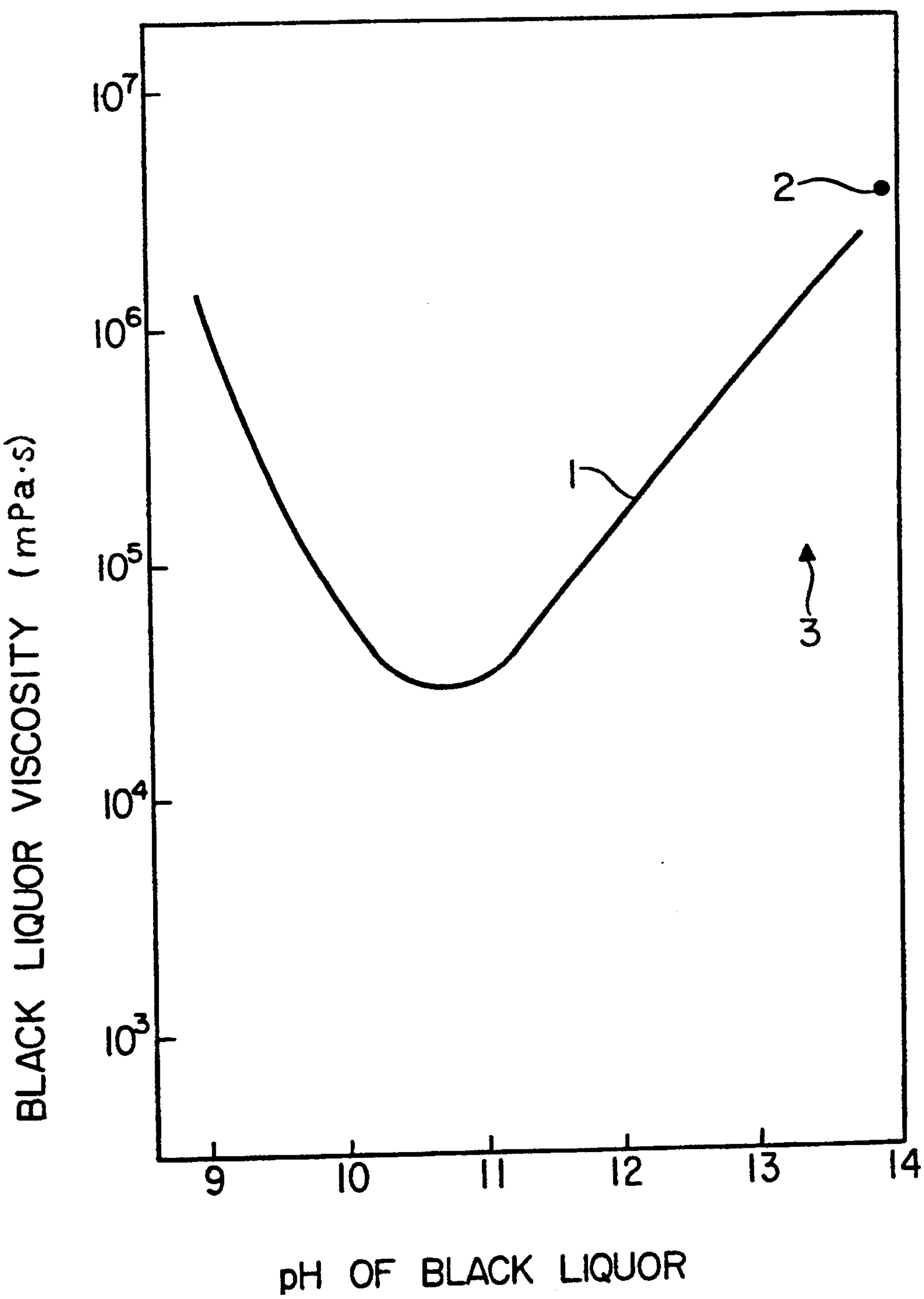
BLACK LIQUOR VISCOSITY (mPa·s)
$10^7$
$10^6$
$10^5$
$10^4$
$10^3$
9
10
11
12
13
14
pH OF BLACK LIQUOR
1
2
3

FIG. 4

(a) (d)

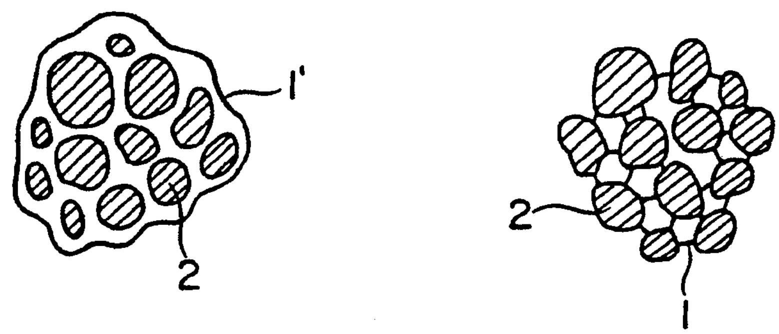


FIG. 7

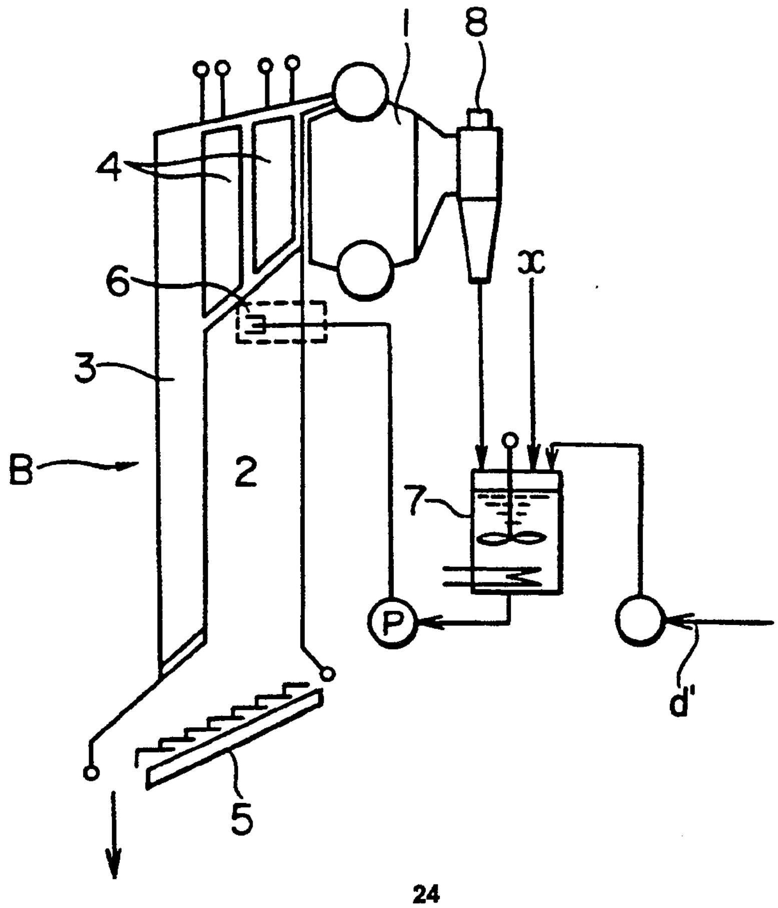

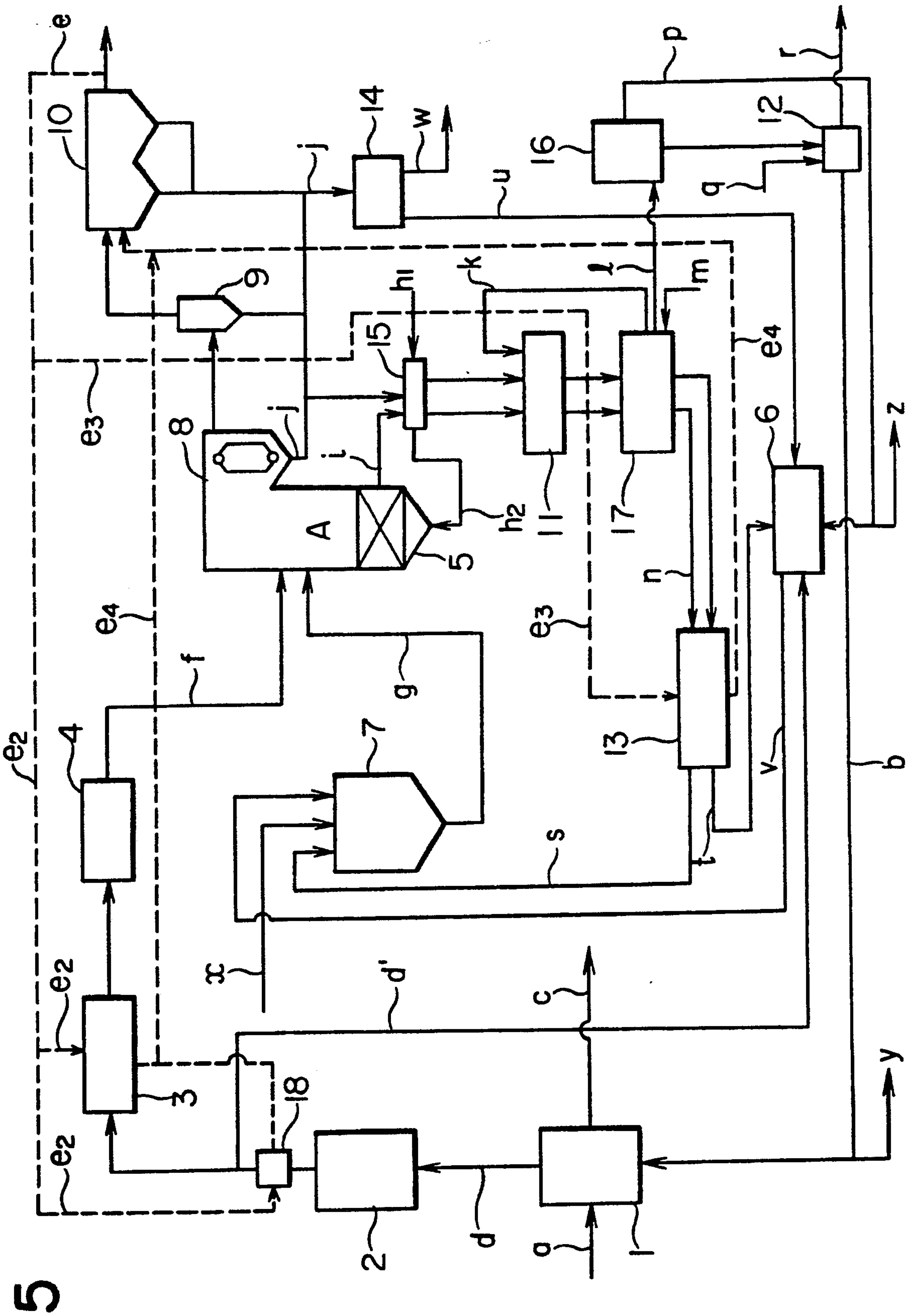
1
2
3
4
5
6
7
8
9
10
11
12
13
14
15
16
17
18
A
a
b
c
d
d'
e
$e_2$
$e_3$
$e_4$
f
g
$h_1$
$h_2$
i
j
k
l
m
n
p
q
r
s
t
u
v
w
x
y
z

FIG. 5

FIG. 6

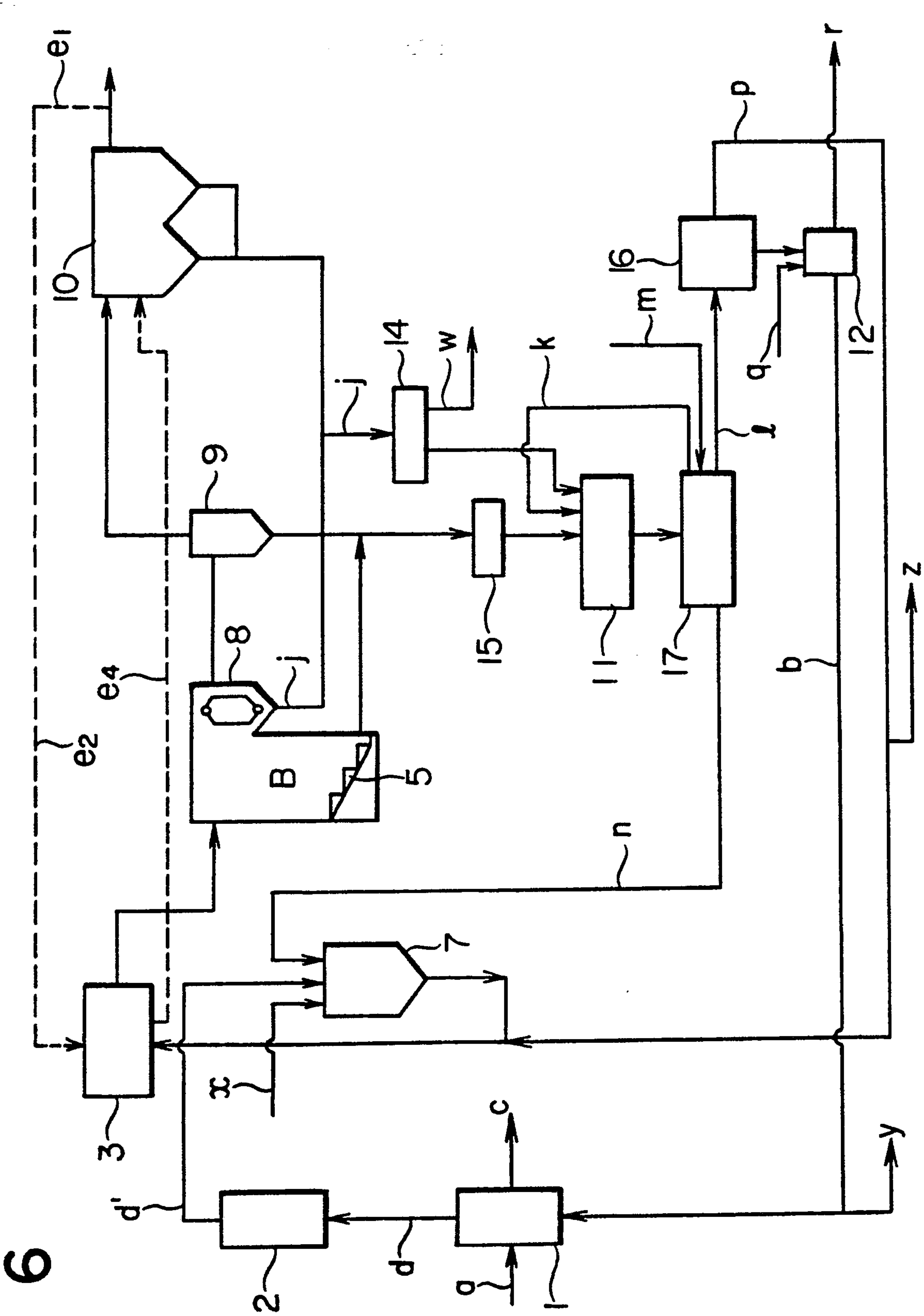

FIG. 8

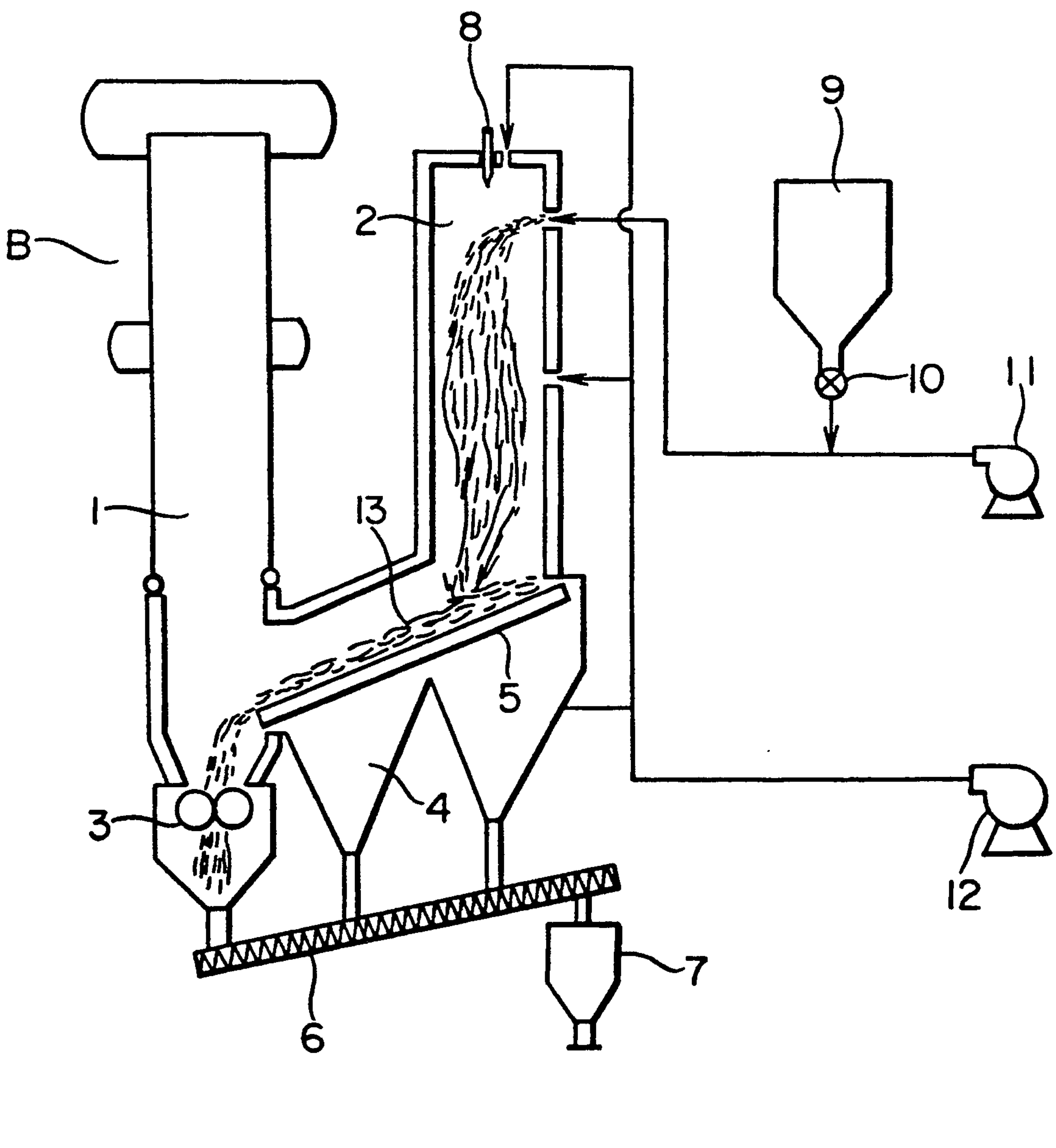

FIG. 9

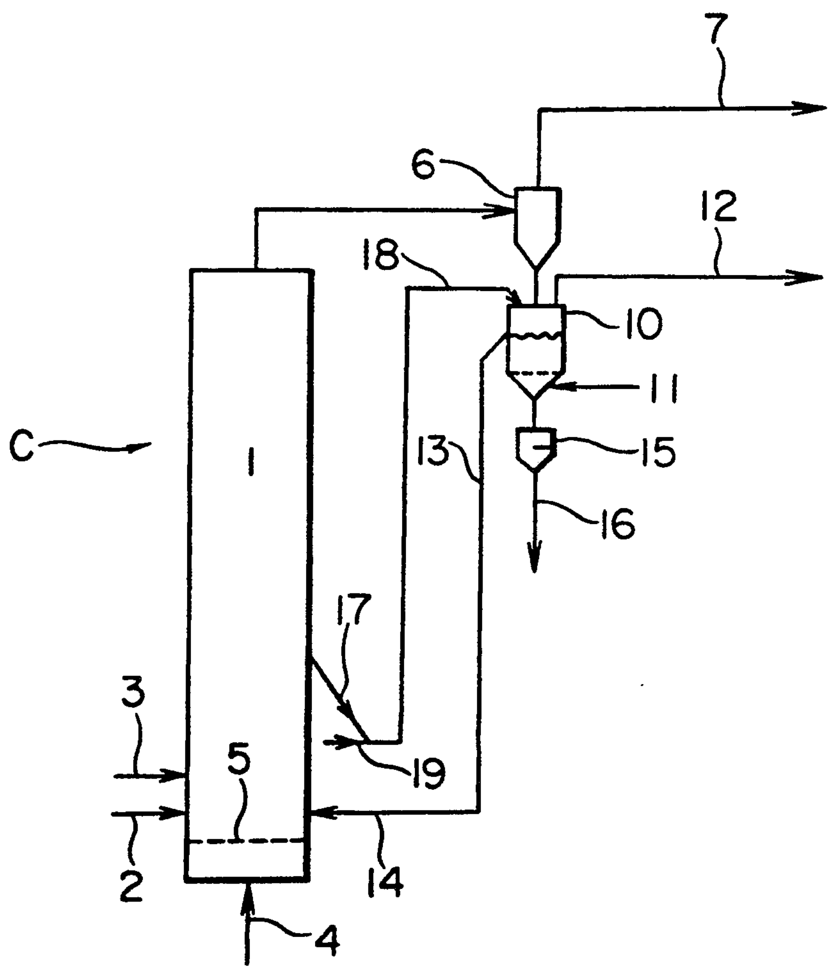

FIG. 10

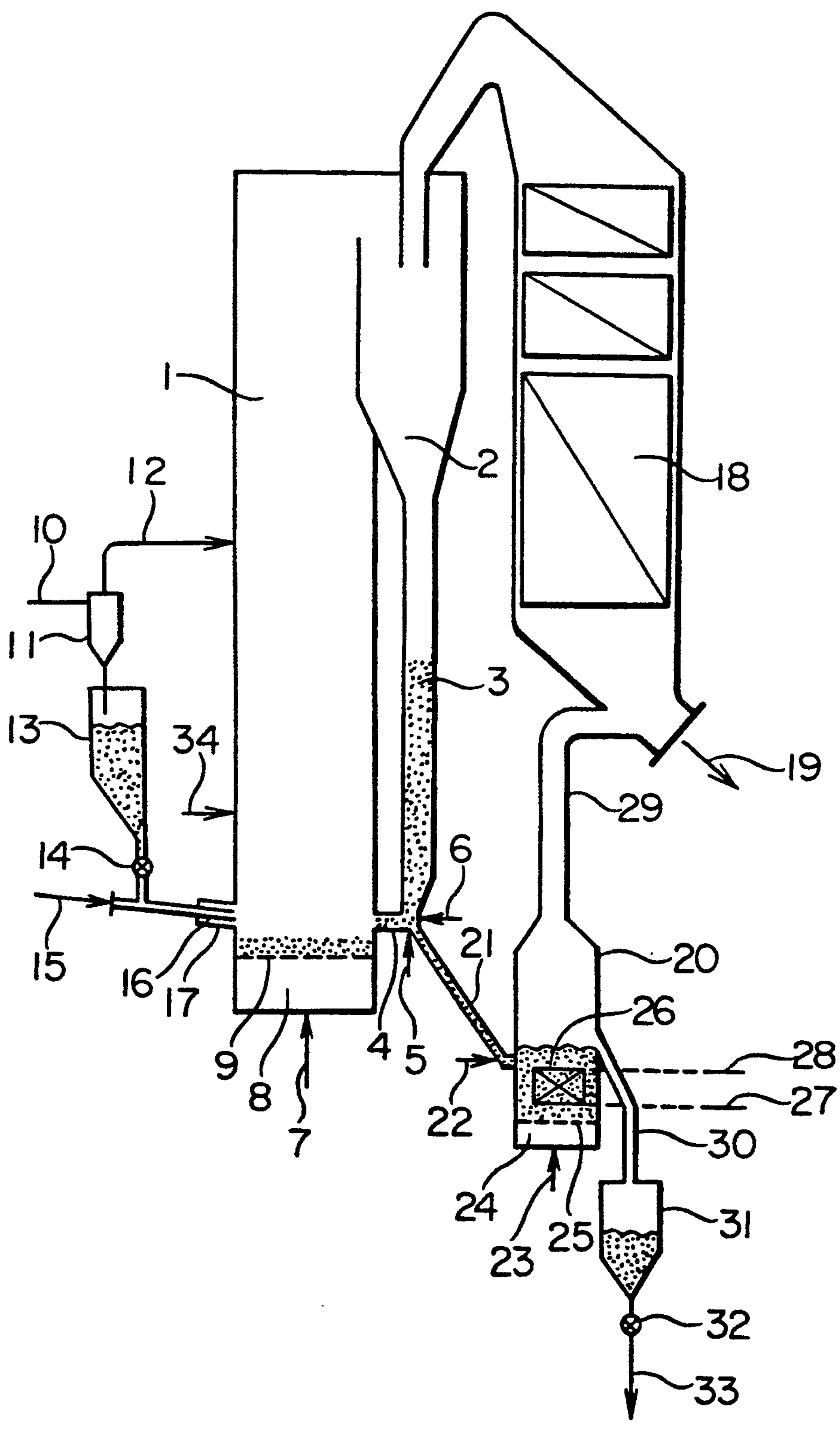
1
2
3
4
5
6
7
8
9
10
11
12
13
14
15
16
17
18
19
20
21
22
23
24
25
26
27
28
29
30
31
32
33
34